# EUROPÄISCHE PATENTSCHRIFT

(11) **EP 3 840 534 B1**
(45) Veröffentlichungstag und Bekanntmachung des Hinweises auf die Patenterteilung: **06.03.2024**
(21) Anmeldenummer: 20214975.3
(22) Anmeldetag: 17.12.2020
(51) Int. Cl.: H05B 6/36, B23P 11/02, B23B 31/117

(54) **INDUKTIONSHEIZVORRICHTUNG, EIN- UND/ODER AUSSCHRUMPFSPANNSTATION UND VERFAHREN**
INDUCTION HEATING DEVICE, SHRINK GRIP AND/OR RELEASE STATION AND METHOD
DISPOSITIF DE CHAUFFAGE À INDUCTION, STATION DE SERRAGE ET/OU DE DESSERRAGE ET PROCÉDÉ

(30) Priorität: 20.12.2019 DE 102019135618; 11.11.2020 DE 102020129700
(43) Veröffentlichungstag der Anmeldung: 23.06.2021
(73) Patentinhaber: E. Zoller GmbH & Co. KG Einstell- und Messgeräte, 74385 Pleidelsheim (DE)
(72) Erfinder: Zoller, Alexander, 74385 Pleidelsheim (DE); Pfau, Christian, 74379 Ingersheim (DE)
(74) Vertreter: Daub, Thomas

(56) Entgegenhaltungen:
- WO-A1-01/89758
- DE-A1-102005 005 892
- DE-A1-102011 082 613
- DE-U1-202018 104 875
- JP-A- 2011 011 333

## Beschreibung

### Stand der Technik

Die Erfindung betrifft eine Induktionsheizvorrichtung nach dem Oberbegriff des Anspruchs 1, eine Ein- und/oder Ausschrumpfspannstation für Werkzeuge nach dem Anspruch 17, ein Verfahren zum Betrieb der Induktionsheizvorrichtung nach dem Oberbegriff des Anspruchs 19 und ein Verfahren zur Herstellung der Induktionsheizvorrichtung nach dem Oberbegriff des Anspruchs 20.

In den Dokumenten WO 01/89758 A1, JP 2011-011333 A und DE 20 2018 104 875 U1 sind bereits eine Induktionsheizvorrichtung für ein Ein- und/oder ein Ausschrumpfen von Werkzeugen in und/oder aus einer Werkzeugaufnahme mit einer zumindest eine Induktionsspule umfassenden Induktionsheizeinheit, welche dazu vorgesehen ist, zumindest einen Teil einer in einem Aufnahmebereich der Induktionsheizeinheit angeordneten Werkzeugaufnahme bei einem Ein- und/oder Ausschrumpfvorgang durch ein Erhitzen aufzuweiten, mit zumindest einer, zumindest ein Magnetflussleitelement aufweisenden Magnetflussleiteinheit zur Leitung eines durch die Induktionsspule erzeugten Magnetflusses, und mit einer Lagereinheit, welche zumindest zu einer beweglichen Lagerung zumindest des Magnetflussleitelements vorgesehen ist, wobei zumindest ein Großteil aller Punkte des Magnetflussleitelements jeweils eine durch die Lagereinheit vorgegebene Bewegungsbahn aufweisen, vorgeschlagen worden.

Die Aufgabe der Erfindung besteht insbesondere darin, eine gattungsgemäße Vorrichtung mit Eigenschaften hinsichtlich einer Magnetflussleitung bei einem induktiven Ein- und/oder Ausschrumpfen von Werkzeugen bereitzustellen. Die Aufgabe wird erfindungsgemäß durch die Merkmale der Patentansprüche 1, 17, 19 und 20 gelöst, während vorteilhafte Ausgestaltungen und Weiterbildungen der Erfindung den Unteransprüchen entnommen werden können.

### Vorteile der Erfindung

Die Erfindung geht aus von einer Induktionsheizvorrichtung für ein Ein- und/oder ein Ausschrumpfen von Werkzeugen in und/oder aus einer Werkzeugaufnahme mit einer zumindest eine Induktionsspule umfassenden Induktionsheizeinheit, welche dazu vorgesehen ist, zumindest einen Teil einer in einem Aufnahmebereich der Induktionsheizeinheit angeordneten Werkzeugaufnahme bei einem Ein- und/oder Ausschrumpfvorgang durch ein Erhitzen aufzuweiten, wobei der Aufnahmebereich insbesondere zumindest im Wesentlichen parallel zu vorgesehenen Rotationsachsen von in die Induktionsheizeinheit einsetzbaren Werkzeugaufnahmen ausgerichtet ist, mit zumindest einer, zumindest ein Magnetflussleitelement aufweisenden Magnetflussleiteinheit zur Leitung eines durch die Induktionsspule erzeugten Magnetflusses, und mit einer Lagereinheit, welche zumindest zu einer beweglichen Lagerung zumindest des Magnetflussleitelements vorgesehen ist, wobei zumindest ein Großteil aller Punkte des Magnetflussleitelements, vorzugsweise alle Punkte des Magnetflussleitelements, jeweils eine, vorzugsweise zumindest teilweise, durch die Lagereinheit, insbesondere durch zumindest eine Kulissenführung der Lagereinheit, vorgegebene Bewegungsbahn aufweisen.

Es wird vorgeschlagen, dass jede der Bewegungsbahnen, insbesondere jede Bewegungsbahn aller der Punkte des Magnetflussleitelements, welche eine Bewegungsbahn aufweisen, insbesondere zumindest zu einem Zeitpunkt einer Bewegung des jeweiligen Punktes des Magnetflussleitelements, vorzugsweise zu jedem Zeitpunkt einer Bewegung des jeweiligen Punktes des Magnetflussleitelements, eine wesentliche Bewegungskomponente aufweist, die senkrecht zu einer Radialrichtung des Aufnahmebereichs, vorzugsweise senkrecht zu allen, insbesondere in einer gemeinsamen Ebene liegenden, Radialrichtungen des Aufnahmebereichs, bevorzugt senkrecht zu einer an einer Endposition der Bewegungsbahn durch den jeweiligen Punkt verlaufenden Radialrichtung, und zugleich senkrecht zu einer Axialrichtung des Aufnahmebereichs ausgerichtet ist. Dadurch kann insbesondere eine vorteilhafte Magnetflussleitung des Induktionsmagnetfelds der Induktionsspule für einen Ein- und/oder Ausschrumpfvorgang von Werkzeugen in und/oder aus Werkzeugaufnahmen erreicht werden. Vorteilhaft kann eine effektive Abschirmung des Induktionsmagnetfelds erreicht werden, mit welcher vorteilhaft gewährleistet werden kann, dass sich die Werkzeugaufnahme erwärmt, also thermisch ausdehnt und zugleich ein in der Werkzeugaufnahme angeordnetes Werkzeug, welches ausgeschrumpft werden soll, sich möglichst nicht erwärmt, also möglichst nicht thermisch ausdehnt. Vorteilhaft kann durch die vorgeschlagene Lagereinheit eine besonders vorteilhafte flexible Anordnung der Magnetflussleitelemente der Magnetflussleiteinheit erreicht werden, welche insbesondere eine Anpassung der Position der Magnetflussleitelemente an verschiedene Werkzeugformen, insbesondere verschiedene Schaftdurchmesser verschiedener Werkzeuge erlaubt, wobei vorteilhaft zugleich ein Gesamtplatzbedarf der Magnetflussleitelemente, insbesondere in einer Radialebene des Aufnahmebereichs der Induktionsheizeinheit, möglichst gering gehalten werden kann. Zudem kann mittels der vorgeschlagenen Bewegungsbahnen vorteilhaft eine möglichst lückenlose Umschließung des Werkzeugs, insbesondere des Werkzeugschafts, während eines Induktionsheizvorgangs und damit eine möglichst effektive Induktionsmagnetfeld-Abschirmung erreicht werden. Außerdem kann, insbesondere im Vergleich mit zumindest im Wesentlichen radial auf ein Werkzeug, insbesondere den Werkzeugschaft, zubewegten Magnetflussleitelementen vorteilhaft eine Beschädigung des Werkzeugs und/oder der Magnetflussleitelemente, beispielsweise durch ein Aufprallen der Magnetflussleitelemente auf das Werkzeug, verhindert werden. Vorteilhaft kann durch die vorgeschlagene Bewegung der Magnetflussleitelemente eine stufenlose Einstellung einer zentralen Öffnung in der Magnetflussleiteinheit ermöglicht werden. Unter einem "Magnetfluss" soll insbesondere ein magnetischer Fluss, ein Magnetfeld und/oder eine magnetische Flussdichte verstanden werden. Vorzugsweise ist keine der Bewegungsbahnen der Punkte des Magnetflussleitelements die eine Bewegungsbahn aufweisen, ausschließlich parallel zu einer (beliebigen), insbesondere von der Axialrichtung ausgehenden, Radialrichtung des Aufnahmebereichs.

Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Schrumpffutter, ausgebildet. Das Werkzeug ist insbesondere als ein Schaftwerkzeug, vorzugsweise als ein Rotations-Schaftwerkzeug, beispielsweise ein Bohrer, ein Fräser, ein Profilwerkzeug und/oder eine Reibahle ausgebildet. Unter einem "Einschrumpfen von Werkzeugen in und/oder aus Werkzeugaufnahmen" soll insbesondere ein Einspannen von Werkzeugen in Werkzeugaufnahmen verstanden werden, bei dem eine Werkzeugaufnahmeöffnung der Werkzeugaufnahme zunächst thermisch aufgeweitet wird, dann ein Werkzeug in die Werkzeugaufnahmeöffnung eingeführt wird und wobei das Werkzeug schließlich nach einem Abkühlen der Werkzeugaufnahme durch einen Kraftschluss, insbesondere einen Reibschluss, in der Werkzeugaufnahme befestigt ist. Unter einem "Ausschrumpfen von Werkzeugen in und/oder aus Werkzeugaufnahmen" soll insbesondere ein Lösen von mittels eines Kraftschlusses, insbesondere eines Reibschlusses, in Werkzeugaufnahmen befestigten Werkzeugen verstanden werden, bei dem die Werkzeugaufnahmeöffnung der Werkzeugaufnahme, insbesondere unter Vermeidung einer gleichzeitigen Erwärmung des Werkzeugs durch die Abschirmeinheit, thermisch soweit aufgeweitet wird, bis das in der Werkzeugaufnahme befestigte Werkzeug aus der Werkzeugaufnahme entnehmbar ist.

Unter "zumindest einem Teil der Werkzeugaufnahme" soll insbesondere zumindest ein die Werkzeugaufnahmeöffnung der Werkzeugaufnahme umfassender Bereich der Werkzeugaufnahme verstanden werden. Die Magnetflussleiteinheit ist insbesondere dazu vorgesehen, das Induktionsmagnetfeld der Induktionsspule zu leiten, vorzugsweise von dem ein-und/oder auszuschrumpfenden Werkzeug wegzuleiten, bevorzugt das Induktionsmagnetfeld von dem ein- und/oder auszuschrumpfenden Werkzeug abzuschirmen. Insbesondere bildet die Magnetflussleiteinheit einen vorgegebenen Pfad für den Magnetfluss des Induktionsmagnetfelds, insbesondere für das Induktionsmagnetfeld, aus. Insbesondere ist die Magnetflussleiteinheit dazu vorgesehen, eine Erwärmung des Werkzeugs bei dem Einschrumpfvorgang und/oder bei dem Ausschrumpfvorgang zumindest wesentlich zu verhindern. Insbesondere ist eine, insbesondere mittlere, Magnetfeldstärke des Induktionsmagnetfelds der Induktionsspule auf einer der Induktionsspule gegenüberliegenden Seite der Magnetflussleiteinheit um zumindest 80%, vorzugsweise um zumindest 90 % und bevorzugt um zumindest 99 % im Vergleich zu einer Anordnung ohne Magnetflussleiteinheit reduziert. Insbesondere weist die Magnetflussleiteinheit eine Mehrzahl an Magnetflussleitelementen, vorzugsweise zumindest zwei Magnetflussleitelemente, vorteilhaft zumindest vier Magnetflussleitelemente, bevorzugt zumindest sechs Magnetflussleitelemente und besonders bevorzugt zumindest acht Magnetflussleitelemente, auf. Insbesondere sind die Magnetflussleitelemente der Magnetflussleiteinheit zumindest im Wesentlichen identisch zueinander ausgebildet. Unter "zumindest im Wesentlichen identisch" soll insbesondere abgesehen von Produktionstoleranzen identisch verstanden werden. Alternativ kann jedoch auch zumindest ein Magnetflussleitelement oder mehrere Magnetflussleitelemente unterschiedlich von zumindest einem weiteren Magnetflussleitelement ausgebildet sein. Das Magnetflussleitelement ist insbesondere zumindest teilweise aus einem Material ausgebildet, welches magnetisch leitend und elektrisch schlecht- oder nichtleitend ist. Insbesondere weist zumindest ein Teil des Magnetflussleitelements eine hohe magnetische Permeabilität auf. Vorzugsweise beträgt eine relative magnetische Permeabilitätszahl des Magnetflussleitelements, insbesondere des magnetisch leitenden Teils des Magnetflussleitelements, zumindest 100, vorteilhaft zumindest 500, bevorzugt zumindest 1000 und besonders bevorzugt zumindest 2000. Insbesondere ist das Magnetflussleitelement zumindest teilweise aus einem ferrimagnetischen Werkstoff ausgebildet. Insbesondere ist das Magnetflussleitelement zumindest teilweise aus einer ferrimagnetischen Oxidkeramik ausgebildet. Insbesondere ist das Magnetflussleitelement zumindest teilweise aus einer weichmagnetischen ferrimagnetischen Oxidkeramik ausgebildet. Beispielsweise umfasst das Magnetflussleitelement ein NiZn-Ferrit oder ein MnZn-Ferrit. Insbesondere ist denkbar, dass ein dem Aufnahmebereich zugewandter Teil des Magnetflussleitelements aus der ferrimagnetischen Oxidkeramik und ein von dem Aufnahmebereich abgewandter Teil des Magnetflussleitelements aus einem von der ferrimagnetischen Oxidkeramik verschiedenen Werkstoff, beispielsweise Kunststoff, ausgebildet ist. Dadurch kann vorteilhaft eine gute Magnetfeldleitung bei zugleich möglichst geringen Kosten erreicht werden. Insbesondere ist das Magnetflussleitelement einstückig ausgebildet. Vorzugsweise ist das Magnetflussleitelement einteilig oder monolithisch ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Insbesondere sind die Magnetflussleitelemente zu einer Feldformung des Induktionsmagnetfelds der Induktionsspule vorgesehen. Vorzugsweise bilden die Magnetflussleitelemente Feldformerelemente aus. Vorzugsweise bildet die Magnetflussleiteinheit eine Feldformereinheit zu einer Formung des Induktionsmagnetfelds aus.

Insbesondere werden zur Herstellung der Magnetflussleitelemente zunächst Rohlinge der Magnetflussleitelemente aus einem Pulver gepresst, vorzugsweise bei Temperaturen über 1000°C gesintert. Anschließend werden die Rohlinge vorzugsweise als zusammenhängende Scheibe, die mehrere Magnetflussleitelemente, vorzugsweise alle Magnetflussleitelemente der Magnetflussleiteinheit, umfasst gedreht. Dabei wird insbesondere auch eine Auswölbung auf der unteren Seite der Magnetflussleitelemete erzeugt. Anschließend wird die erzeugte Scheibe insbesondere mittels einem Erodieren oder einem anderen Trennungsverfahren in Segmente aufgeteilt, welche dann die einzelnen Magnetflussleitelemente ausbilden.

Insbesondere bildet die Magnetflussleiteinheit zudem eine Werkzeuggreifereinheit aus. Insbesondere bilden die Magnetflussleitelemente der Magnetflussleiteinheit relativ zueinander bewegliche Werkzeuggreiferelemente aus. Insbesondere ist die durch die Magnetflussleiteinheit ausgebildete Werkzeuggreifereinheit dazu vorgesehen, durch eine Bewegung der Magnetflussleitelemente auf einen Werkzeugschaft hin, den Werkzeugschaft zu kontaktieren und dadurch das Werkzeug zu greifen. Insbesondere ist die durch die Magnetflussleiteinheit ausgebildete Werkzeuggreifereinheit dazu vorgesehen durch eine Variation eines Öffnungsdurchmessers einer zentralen Öffnung, d.h. einer inneren Öffnung, der Magnetflussleiteinheit das Werkzeug, insbesondere an dessen Werkzeugschaft, zu greifen. Insbesondere ist die Werkzeuggreifereinheit dazu vorgesehen, das Werkzeug bei einem Einschrumpfvorgang in die Werkzeugaufnahme einzusetzen und/oder das Werkzeug bei einem Ausschrumpfvorgang aus der Werkzeugaufnahme zu entnehmen. Insbesondere ist denkbar, dass die Werkzeuggreifereinheit, d.h. die Magnetflussleiteinheit, von dem die Induktionsspule umfassenden Teil der Induktionsheizeinheit separierbar ausgebildet ist. Dadurch, dass die Magnetflussleiteinheit zugleich eine Werkzeuggreifereinheit ausbildet, kann vorteilhaft eine hohe Flexibilität erreicht werden. Zudem kann vorteilhaft ein besonders zügiges Einsetzen und/oder Entnehmen des Werkzeugs in und/oder aus der Werkzeugaufnahme erreicht werden, wodurch vorteilhaft eine Energieeinsparung erreicht werden kann.

Unter einem "Aufnahmebereich der Induktionsheizeinheit" soll insbesondere eine zumindest im Wesentlichen gerade Öffnung innerhalb der Induktionsheizeinheit verstanden werden. Vorzugsweise verläuft zumindest ein Großteil des magnetischen Flusses, vorzugsweise der komplette magnetische Fluss, durch eine, insbesondere beliebige Öffnungsebene des Aufnahmebereichs. Bevorzugt verlaufen zumindest im Wesentlichen alle Magnetfeldlinien des Induktionsmagnetfelds einmal durch den Aufnahmebereich der Induktionsheizeinheit. Insbesondere ist der Aufnahmebereich der Induktionsheizeinheit zumindest im Wesentlichen parallel zu einer Spulenachse der Induktionsspule der Induktionsheizeinheit ausgerichtet. Insbesondere ist der Aufnahmebereich zumindest im Wesentlichen parallel zu einer Längsachse und/oder einer Haupterstreckungsrichtung der in die Induktionsheizeinheit einsetzbaren Werkzeugaufnahmen und/oder Werkzeuge angeordnet. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Insbesondere ist die Induktionsspule als eine Zylinderspule und/oder als ein Solenoid ausgebildet. Die Induktionsheizeinheit ist insbesondere dazu vorgesehen, ein Induktionsmagnetfeld, vorzugsweise ein, insbesondere hochfrequentes, magnetisches Wechselfeld zu erzeugen. Insbesondere wechselwirkt das Material der, vorzugsweise metallischen, Werkzeugaufnahme mit dem Induktionsmagnetfeld und erhitzt sich dadurch. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere ist die Lagereinheit zumindest zu einer, vorzugsweise ausschließlich, linearbeweglichen Lagerung des Magnetflussleitelements, vorzugsweise aller Magnetflussleitelemente, vorgesehen. Alternativ ist denkbar, dass zumindest ein Teil der Punkte des Magnetflussleitelements eine Bewegungsbahn aufweisen, welche sich aus einer Überlagerung einer Linearbewegung und einer Rotationsbewegung um eine Rotationsachse zusammensetzt. Unter einem "Großteil" soll insbesondere 51 %, vorzugsweise 66 %, bevorzugt 80 % und besonders bevorzugt 95 % verstanden werden. Wenn alle Punkte des Magnetflussleitelements eine Bewegungsbahn aufweisen, ist insbesondere kein Punkt des Magnetflussleitelements frei von einer Bewegungsbahn. Vorzugsweise ist das Magnetflussleitelement frei von ortsfesten Punkten. Bevorzugt ist das Magnetflussleitelement frei von Punkten, welche bei einer Bewegung eines beliebigen anderen Punkts des Magnetflussleitelements unbewegt bleiben und beispielsweise lediglich eine Rotationachse des Magnetflussleitelements schneiden. Insbesondere bewegen sich bei allen möglichen durch die Lagereinheit vorgegebenen Bewegungen immer alle Punkte des Magnetflussleitelements.

Unter einer "wesentlichen Bewegungskomponente" soll insbesondere eine Bewegungskomponente, insbesondere Bewegungsrichtungskomponente, verstanden werden, welche zumindest 5 %, vorzugsweise zumindest 10 %, vorteilhaft zumindest 20 %, bevorzugt zumindest 30 % und besonders bevorzugt zumindest 50 % einer Gesamtbewegung, insbesondere Gesamtbewegungsrichtung, insbesondere bei einer orthogonalen, vorzugsweise zwei- oder dreidimensionalen, Vektorzerlegung der Gesamtbewegung, insbesondere Gesamtbewegungsrichtung, umfasst. Insbesondere ist die Bewegungskomponente senkrecht zur Radialrichtung des Aufnahmebereichs als ein Teil der Gesamtbewegung ausgebildet, welcher in eine Richtung senkrecht zu der Radialrichtung des Aufnahmebereichs, vorzugsweise senkrecht zu allen möglichen Radialrichtungen des Aufnahmebereichs, verläuft. Insbesondere ist die Bewegungskomponente senkrecht zur Axialrichtung des Aufnahmebereichs als ein Teil der Gesamtbewegung ausgebildet, welcher in eine Richtung senkrecht zu der Axialrichtung des Aufnahmebereichs verläuft. Insbesondere ist die Bewegungskomponente, welche zugleich senkrecht zur Axialrichtung des Aufnahmebereichs und zugleich senkrecht zur Radialrichtung des Aufnahmebereichs ist, als ein Teil der Gesamtbewegung ausgebildet, welcher zugleich in eine Richtung senkrecht zu der Axialrichtung des Aufnahmebereichs und senkrecht zu der Radialrichtung des Aufnahmebereichs, vorzugsweise senkrecht zu allen möglichen Radialrichtungen des Aufnahmebereichs, verläuft. Insbesondere verläuft die Radialrichtung radial zu einer Längsrichtung, einer Rotationsymmetrieachse und/oder einer Haupterstreckungsrichtung des Aufnahmebereichs. Insbesondere verläuft die Radialrichtung radial zu einer Spulenachse der Induktionsspule der Induktionsheizeinheit. Insbesondere verlaufen die Radialrichtungen von der Spulenachse ausgehend speichenförmig nach außen. Insbesondere verläuft die Axialrichtung zumindest im Wesentlichen parallel zu einer Längsrichtung, einer Rotationsymmetrieachse und/oder einer Haupterstreckungsrichtung des Aufnahmebereichs. Insbesondere verläuft die Axialrichtung zumindest im Wesentlichen parallel zu einer Spulenachse der Induktionsspule der Induktionsheizeinheit. Insbesondere verläuft die zu einer Bewegungsbahn eines Punkts zugeordnete Radialrichtung des Aufnahmebereichs durch den jeweiligen Punkt, wenn dieser an einer der Endpositionen der Bewegungsbahn angeordnet ist.

Insbesondere sind alle Linearbewegungsbahnen der durch die Lagereinheit vorgegebenen Schar von Bewegungsbahnen, insbesondere zumindest der Punkte der Magnetflussleitelemente, die eine Bewegungsbahn aufweisen, zumindest in einer Projektion auf eine zumindest im Wesentlichen senkrecht zu der Axialrichtung des Aufnahmebereichs liegende Ebene relativ zu einer Radialrichtung des Aufnahmebereichs der Induktionsheizeinheit angewinkelt, vorzugsweise relativ zu allen möglichen Radialrichtungen des Aufnahmebereichs der Induktionsheizeinheit angewinkelt.

Insbesondere sind gedachte gerade Verlängerungen von allen Linearbewegungsbahnen der durch die Lagereinheit vorgegebenen Schar von Bewegungsbahnen, insbesondere zumindest der Punkte der Magnetflussleitelemente, die eine Bewegungsbahn aufweisen, frei von Schnittpunkten mit einer Axialrichtung des Aufnahmebereichs der Induktionsheizeinheit.

Insbesondere weisen alle Linearbewegungsbahnen der durch die Lagereinheit vorgegebenen Schar von Bewegungsbahnen, insbesondere zumindest der Punkte der Magnetflussleitelemente, die eine Bewegungsbahn aufweisen, zumindest in einer Projektion auf die zumindest im Wesentlichen senkrecht zu der Axialrichtung des Aufnahmebereichs liegende Ebene eine zu einer Radialrichtung des Aufnahmebereichs der Induktionsheizeinheit tangentiale Komponente auf.

Das Magnetflussleitelement ist insbesondere frei von Punkten, deren Bewegungsbahn bei einem Verstellen der Position des Magnetflussleitelements rein parallel zur Radialrichtung des Aufnahmebereichs verlaufen. Das Magnetflussleitelement ist insbesondere frei von Punkten, deren Bewegungsbahn bei einem Verstellen der Position des Magnetflussleitelements rein parallel zu zumindest einer Radialrichtung von allen denkbaren Radialrichtungen des Aufnahmebereichs verlaufen. Das Magnetflussleitelement ist insbesondere frei von Punkten, deren Bewegungsbahn bei einem Verstellen der Position des Magnetflussleitelements überwiegend (beispielsweise zu mehr als 90 %) oder ausschließlich auf das Zentrum der Spulenöffnung hin gerichtet ist.

Erfindungsgemäß ist zumindest eine der Bewegungsbahnen der Punkte des Magnetflussleitelements, welche insbesondere eine Bewegungsbahn aufweisen, eine rein lineare Bewegungsbahn. Dadurch kann insbesondere eine vorteilhafte Einstellmöglichkeit für die Magnetflussleiteinheit geschaffen werden, welche insbesondere eine lückenlose Umschließung eines Werkzeugs und/oder einer Werkzeugaufnahme erlaubt und/oder welche insbesondere besonders platzsparend ausgebildet ist. Vorzugsweise sind alle Bewegungsbahnen von Punkten des Magnetflussleitelements rein lineare Bewegungsbahnen. Insbesondere ist die rein lineare Bewegungsbahn frei von Kurven und/oder Krümmungen.

Wenn die zumindest eine rein lineare Bewegungsbahn zumindest im Wesentlichen senkrecht zu der Radialrichtung des Aufnahmebereichs der Induktionsheizeinheit, vorzugsweise senkrecht zu allen denkbaren Radialrichtungen des Aufnahmebereichs der Induktionsheizeinheit, verläuft, kann vorteilhaft eine besonders einfache Umsetzung einer platzsparend einstellbaren Magnetflussleiteinheit erreicht werden. Vorzugsweise verlaufen alle rein linearen Bewegungsbahnen, bevorzugt alle Bewegungsbahnen, von Punkten des Magnetflussleitelements senkrecht zur Radialrichtung des Aufnahmebereichs der Induktionsheizeinheit. Insbesondere verläuft die zumindest eine rein lineare Bewegungsbahn tangential zu dem Aufnahmebereich, insbesondere zu einer die Axialrichtung des Aufnahmebereichs zylinderförmig umschließenden Hüllkontur der Axialrichtung. Vorzugsweise verlaufen alle rein linearen Bewegungsbahnen tangential zu dem Aufnahmebereich, insbesondere zu der die Axialrichtung des Aufnahmebereichs zylinderförmig umschließenden Hüllkontur der Axialrichtung. Bevorzugt verlaufen alle Bewegungsbahnen tangential zu dem Aufnahmebereich, insbesondere zu der die Axialrichtung des Aufnahmebereichs zylinderförmig umschließenden Hüllkontur der Axialrichtung.

Zudem wird vorgeschlagen, dass jede der Bewegungsbahnen, insbesondere jede Bewegungsbahn aller der Punkte des Magnetflussleitelements, welche eine Bewegungsbahn aufweisen, in einer zu der Axialrichtung des Aufnahmebereichs zumindest im Wesentlichen senkrecht liegenden Bewegungsebene verläuft. Dadurch kann insbesondere eine besonders vorteilhafte Magnetflussleitung, insbesondere Abschirmung des Induktionsmagnetfelds, erreicht werden. Insbesondere kann eine zumindest im Wesentlichen ebene Auflage der Magnetflussleitelemente auf einem Auslauf der Werkzeugaufnahme erreicht werden. Vorteilhaft kann eine Planauflage der Magnetflussleitelemente auf dem Auslauf, insbesondere auf einer Planfläche der Werkzeugaufnahme, ermöglicht werden. Vorteilhaft kann ein über die Werkzeugaufnahme überstehender Teil eines in der Werkzeugaufnahme aufgenommenen und insbesondere auszuschrumpfenden Werkzeugs, welcher zwischen dem oberen Ende der Werkzeugaufnahme, insbesondere dem Auslauf der Werkzeugaufnahme, und der Magnetflussleiteinheit, insbesondere einer, vorzugsweise der Induktionsspule zugewandten, Unterseite der Magnetflussleitelemente der Magnetflussleiteinheit angeordneter Teil möglichst klein gehalten werden. Vorteilhaft kann die Magnetflussleiteinheit lückenlos auf die Werkzeugaufnahme aufgelegt werden. Insbesondere erfolgt eine Bewegung der Magnetflussleitelemente der Magnetflussleiteinheit zumindest im Wesentlichen in einer einzelnen Ebene, welche vorzugsweise parallel zu den Radialrichtungen des Aufnahmebereichs verläuft. Insbesondere liegt die Bewegungsebene zumindest im Wesentlichen parallel zu den Radialrichtungen des Aufnahmebereichs der Induktionsheizeinheit. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Zusätzlich wird vorgeschlagen, dass das Magnetflussleitelement unverschwenkbar gelagert ist. Dadurch kann vorteilhaft eine besonders einfache Umsetzung der Induktionsheizvorrichtung ermöglicht werden, wodurch vorteilhaft Kosten und Fehlfunktionen gering gehalten werden können. Insbesondere verringert sich dadurch ein Risiko eines Verkantens des Magnetflussleitelements erheblich. Insbesondere verhindert die Lagerung durch die Lagereinheit eine Schwenkbewegung des Magnetflussleitelements, insbesondere aller Magnetflussleitelemente der Magnetflussleiteinheit.

Alternativ dazu wird vorgeschlagen, dass abgesehen von der zumindest einen rein linearen Bewegungsbahn zumindest ein Großteil aller weiteren Bewegungsbahnen des Magnetflussleitelements gekrümmt sind. Dadurch kann vorteilhaft eine besonders hohe Kompaktheit der durch die Magnetflussleitelemente gebildeten Magnetflussleiteinheit, insbesondere bei einer gleichzeitig möglichst großen zentralen Öffnung und/oder einem möglichst großen Variationsbereich der zentralen Öffnung, erreicht werden. Vorteilhaft kann ein Verhältnis aus einem maximalem Außendurchmesser der Magnetflusseinheit und einem maximalen Öffnungsdurchmesser der zentralen Öffnung der Magnetflusseinheit minimiert werden. Insbesondere sind alle weiteren (nicht rein linearen) Bewegungsbahnen des Magnetflussleitelements, vorzugsweise aller Magnetflussleitelemente der Magnetflussleiteinheit, in eine gleiche Richtung gekrümmt. Insbesondere sind alle weiteren (nicht rein linearen) Bewegungsbahnen des Magnetflussleitelements, vorzugsweise aller Magnetflussleitelemente der Magnetflussleiteinheit, von einer Unterseite der Magnetflussleiteinheit aus gesehen rechtsgekrümmt. Alternativ ist selbstverständlich auch eine Linkskrümmung der Bewegungsbahnen denkbar. Insbesondere sind die Bewegungsbahnen, vorzugsweise zumindest ab einem ersten Abweichen von einer Linearbewegung, monoton und/oder stetig gekrümmt. Insbesondere variiert die Krümmung zumindest einer Bewegungsbahn, insbesondere der Bewegungsbahnen entlang der Bewegungsbahn, insbesondere entlang den Bewegungsbahnen.

Ferner wird vorgeschlagen, dass eine Krümmung der gekrümmten Bewegungsbahnen, insbesondere zumindest einer gekrümmten Bewegungsbahn, bei einer Bewegung des zugehörigen Magnetflussleitelements in Richtung eines Zentrums der Induktionsheizeinheit zunimmt. Dadurch kann vorteilhaft eine besonders hohe Kompaktheit der durch die Magnetflussleitelemente gebildeten Magnetflussleiteinheit erreicht werden. Vorteilhaft kann ein enges Aneinanderanliegen der Magnetflussleitelemente auch bei kleinen Öffnungsdurchmessern der zentralen Öffnung der Magnetflussleiteinheit erreicht werden. Insbesondere steigt die Krümmung der gekrümmten Bewegungsbahn entlang der Bewegungsbahn, vorzugsweise zumindest entlang einer zweiten Hälfte der, insbesondere eine Schließbewegung der Magnetflussleiteinheit beschreibenden, Bewegungsbahn (von der Mitte der Bewegungsbahn zu einem Ende der Bewegungsbahn an welchem das Magnetflussleitelement, an einem Punkt minimalen Abstands zu einem Zentrum der Öffnung der Magnetflussleiteinheit angeordnet ist) um zumindest 25 %, vorzugsweise um zumindest 50 %, bevorzugt um zumindest 75 % und besonders bevorzugt um zumindest 100 %.

Des Weiteren wird vorgeschlagen, dass die Lagereinheit eine, insbesondere zumindest im Wesentlichen gerade, Kulissenführung zu einer Einschränkung einer Bewegungsfreiheit zumindest des Magnetflussleitelements aufweist. Dadurch kann vorteilhaft eine besonders einfache Umsetzung der Induktionsheizvorrichtung ermöglicht werden, wodurch vorteilhaft Kosten und Fehlfunktionen gering gehalten werden können. Unter einer Kulissenführung soll insbesondere eine Führung des Magnetflussleitelements bei einem Verstellen in einer Führungskulisse, insbesondere einer Führungsschiene, verstanden werden. Vorzugsweise ist eine von dem Verlauf der Führungskulisse abweichende Bewegung des Magnetflussleitelements unterbunden. Insbesondere weist jedes Magnetflussleitelement der Magnetflussleiteinheit eine, insbesondere separate Kulissenführung auf. Insbesondere weist jedes Magnetflussleitelement der Magnetflussleiteinheit eine, insbesondere separate Führungskulisse, vorzugsweise Führungsschiene, auf.

Wenn die Lagereinheit zumindest eine dem zumindest einen Magnetflussleitelement zugeordnete, insbesondere zumindest im Wesentlichen gerade, zweite Kulissenführung aufweist, welche insbesondere zumindest im Wesentlichen parallel zu der Kulissenführung ausgerichtet ist, kann vorteilhaft eine besonders zuverlässige Führung der Magnetflussleitelemente erreicht werden. Zudem kann vorteilhaft ein, insbesondere freies, Verdrehen und/oder Verschwenken der Magnetflussleitelemente verhindert werden. Vorteilhaft kann dadurch ein Verkanten verhindert und eine hohe Zuverlässigkeit erreicht werden. Vorzugsweise ist jedem Magnetflussleitelement zumindest eine erste Kulissenführung und zumindest eine zweite Kulissenführung zugeordnet. Bevorzugt ist jedem Magnetflussleitelement zumindest eine erste Führungskulisse, insbesondere Führungsschiene, und zumindest eine zweite Führungskulisse, insbesondere Führungsschiene, zugeordnet. Insbesondere sind die Kulissenführungen unterschiedlicher Magnetflussleitelemente voneinander getrennt ausgebildet. Wenn hingegen alternativ die Möglichkeit, die Magnetflussleitelemente zu schwenken, bewahrt werden soll, ist vorgesehen, auf die zweite Kulissenführung zu verzichten.

Wenn die Magnetflussleiteinheit zumindest ein weiteres Magnetflussleitelement aufweist, welches, insbesondere in einer gemeinsamen Bewegungsebene, benachbart zu dem Magnetflussleitelement angeordnet ist, kann vorteilhaft eine besonders flexible Anordnung der Magnetflussleiteinheit und/oder eine besonders flexibel anpassbare Abschirmung des Induktionsmagnetfelds erreicht werden. Unter "benachbart" soll insbesondere unmittelbar benachbart und/oder unmittelbar nebeneinander angeordnet verstanden werden.

Weiterhin wird vorgeschlagen, dass das Magnetflussleitelement, insbesondere in allen Betriebszuständen der Magnetflussleiteinheit, überlappungsfrei mit jeglichen weiteren Magnetflussleitelementen der Magnetflussleiteinheit ist. Dadurch kann vorteilhaft eine besonders hohe Materialnutzungseffizienz erreicht werden, wodurch insbesondere Kosten gering gehalten werden können. Vorteilhaft kann eine Planauflage der Magnetflussleitelemente auf dem Auslauf, insbesondere auf einer Planfläche der Werkzeugaufnahme, ermöglicht werden, wodurch vorteilhaft eine besonders gute Abschirmung des Induktionsmagnetfelds von einem auszuschrumpfenden Werkzeug erreicht werden und insbesondere eine Erwärmung des Werkzeugs beim Ausschrumpfen verhindert werden kann. Insbesondere sind Ober- und/oder Unterseiten der Magnetflussleitelemente in allen Betriebszuständen der Magnetflussleiteinheit überlappungsfrei. Insbesondere sind die Magnetflussleitelemente zumindest in der Axialrichtung gesehen in allen Betriebszuständen der Magnetflussleiteinheit überlappungsfrei. Insbesondere verdeckt in allen denkbaren Betriebszuständen der Magnetflussleiteinheit keines der Magnetflussleitelemente in der Axialrichtung gesehen ein weiteres Magnetflussleitelement der Magnetflussleiteinheit teilweise oder vollständig.

Zudem wird vorgeschlagen, dass benachbarte Magnetflussleitelemente der Magnetflussleiteinheit in allen durch die Lagereinheit einstellbaren Positionen eng aneinander anliegen. Dadurch kann vorteilhaft eine möglichst lückenlose Umschließung des Werkzeugs und/oder der Werkzeugaufnahme in der Umfangsrichtung erreicht werden. Dadurch kann vorteilhaft eine besonders effektive Magnetflussleitung, vorzugsweise Induktionsmagnetfeld-Abschirmung, erreicht werden. Insbesondere beträgt ein, insbesondere minimaler, Spalt zwischen unmittelbar benachbarten Magnetflussleitelementen weniger als 0,5 mm, vorzugsweise weniger als 0,25 mm und bevorzugt weniger als 0,1 mm, insbesondere in allen möglichen Betriebszuständen der Magnetflussleiteinheit. Besonders bevorzugt berühren sich benachbarte Magnetflussleitelemente in allen möglichen Betriebszuständen. Insbesondere berühren sich die benachbarten Magnetflussleitelemente in allen möglichen Betriebszuständen (ausschließlich) an Seitenkanten, vorzugweise an Berührungskanten, welche vorzugsweise zumindest teilweise senkrecht zu der Bewegungsebene der Magnetflussleitelemente verlaufen. Insbesondere kann das Magnetflussleitelement eine Gleitfläche an Berührungskanten, beispielsweise eine Gleitbeschichtung, aufweisen. Dadurch kann vorteilhaft ein Verschleiß gering gehalten werden.

Zusätzlich wird vorgeschlagen, dass eine gerade Verlängerung einer, insbesondere beliebigen, rein linearen Bewegungsbahn der durch die Lagereinheit vorgegebenen Schar von Bewegungsbahnen des Magnetflussleitelements, insbesondere in der gemeinsamen Bewegungsebene, vorzugsweise eine gerade Verlängerung einer ersten Führungskulisse des Magnetflussleitelements, mit einer geraden Verlängerung einer, insbesondere beliebigen, weiteren rein linearen Bewegungsbahn einer durch die Lagereinheit vorgegebenen weiteren Schar von weiteren Bewegungsbahnen des weiteren Magnetflussleitelements, insbesondere mit einer geraden Verlängerung einer ersten Führungskulisse des weiteren Magnetflussleitelements, einen Winkel α einschließt. Dadurch kann vorteilhaft eine besonders einfache Umsetzung einer platzsparend einstellbaren und zugleich ein auszuschrumpfendes Werkzeug möglichst lückenlos umschließenden Magnetflussleiteinheit erreicht werden.

Wenn dann der Winkel α zumindest im Wesentlichen einer Formel α = 360°/N_{M} genügt, wobei N_{M} einer Gesamtanzahl aller Magnetflussleitelemente der Magnetflussleiteinheit entspricht, kann eine besonders einfach verstellbare und besonders effektive Abschirmung des Induktionsmagnetfelds erreicht werden.

Zudem wird vorgeschlagen, dass eine gerade Verlängerung einer rein linearen Bewegungsbahn der durch die Lagereinheit vorgegebenen Schar von Bewegungsbahnen des Magnetflussleitelements parallel zu einer geraden Verlängerung einer zusätzlichen weiteren rein linearen Bewegungsbahn einer durch die Lagereinheit vorgegebenen weiteren Schar von weiteren Bewegungsbahnen eines, insbesondere nicht direkt zu dem Magnetflussleitelement benachbart angeordneten, zusätzlichen weiteren Magnetflussleitelements der Magnetflussleiteinheit verläuft, wobei diese beiden geraden Verlängerungen auf gegenüberliegenden Seiten der Axialrichtung und/oder eines Zentrums der Magnetflussleiteinheit angeordnet sind. Dadurch kann insbesondere eine vorteilhafte Kraftverteilung innerhalb der Magnetflussleiteinheit bei einem Verstellen der Positionen der Magnetflussleitelemente erreicht werden. Insbesondere kann eine vorteilhafte Bewegung der Magnetflussleitelemente relativ zueinander zu einer Einstellung eines Öffnungsdurchmessers der zentralen Öffnung in der Magnetflussleiteinheit erreicht werden. Insbesondere ist das zusätzliche weitere Magnetflussleitelement etwa auf einer, insbesondere relativ zu der zentralen Öffnung in der Magnetflussleiteinheit, gegenüberliegenden Seite der Magnetflussleiteinheit angeordnet wie das Magnetflussleitelement. Insbesondere ist die Größe und/oder der Druckmesser der zentralen Öffnung durch eine Verstellung der Positionen der Magnetflussleitelemente zueinander kontinuierlich vergrößerbar und verkleinerbar. Insbesondere ist die Größe und/oder der Druckmesser der zentralen Öffnung durch eine Verstellung der Positionen der Magnetflussleitelemente zueinander kontinuierlich zwischen einem maximalen Öffnungsdurchmesser der inneren Öffnung und einem minimalen Öffnungsdurchmesser der inneren Öffnung variierbar. Insbesondere existiert zumindest eine gerade Verlängerung einer rein linearen Bewegungsbahn eines Magnetflussleitelements, vorzugsweise existieren zumindest zwei gerade Verlängerungen von rein linearen Bewegungsbahnen von Magnetflussleitelementen, die die rein lineare Bewegungsbahn des Magnetflussleitelements und/oder des zusätzlichen weiteren Magnetflussleitelements zumindest im Wesentlichen senkrecht schneiden. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Ferner wird vorgeschlagen, dass die Magnetflussleitelemente der Magnetflussleiteinheit dazu vorgesehen sind, ein in der Induktionsheizeinheit angeordnetes Werkzeug oder eine in der Induktionsheizeinheit angeordnete Werkzeugaufnahme derart im Umfang zu umschließen, dass die Umschließung, insbesondere unabhängig von einer Größe des Umfangs des Werkzeugs oder der Werkzeugaufnahme, vorzugsweise in jedem Betriebszustand der Magnetflussleiteinheit, zumindest im Wesentlichen lückenfrei ist. Dadurch kann vorteilhaft eine besonders effektive Magnetflussleitung, insbesondere eine besonders effektive Induktionsmagnetfeld-Abschirmung erreicht werden. Unter zumindest im Wesentlichen lückenfrei soll insbesondere frei von Spalten in Radialrichtung oder in einer zu einer Radialrichtung zumindest im Wesentlichen parallelen Richtung, welche größer sind als 1 mm, vorzugsweise größer sind als 0,5 mm, bevorzugt größer sind als 0,25 mm und besonders bevorzugt größer sind als 0,1 mm, verstanden werden. Insbesondere ist die Magnetflussleiteinheit, abgesehen von einer inneren Öffnung zur Aufnahme eines Werkzeugs, frei von einer Lücke zwischen Magnetflussleitelementen, deren Größe oder Breite sich bei einem Verstellen der Magnetflussleiteinheit, insbesondere bei einem Verstellen der Größe der inneren Öffnung der Magnetflussleiteinheit, zumindest wesentlich ändert.

Wenn zudem die Magnetflussleitelemente der Magnetflussleiteinheit dazu vorgesehen sind, die in der Größe verstellbare innere Öffnung auszubilden, kann vorteilhaft eine hohe Flexibilität der Induktionsheizvorrichtung erreicht werden. Vorteilhaft kann die Öffnung an verschiedene Werkzeugdurchmesser, insbesondere Schaftdurchmesser von Werkzeugen, angepasst werden. Vorteilhaft kann eine besonders effektive Induktionsmagnetfeld-Abschirmung erreicht werden. Insbesondere weist die verstellbare innere Öffnung eine zumindest im Wesentlichen runde oder eine polygonale Form auf, wobei die polygonale Form vorzugsweise eine Eckenzahl aufweist, die einer Gesamtzahl an Magnetflussleitelementen entspricht. Insbesondere ist die innere Öffnung in der Umfangsrichtung durch jeweils eine Seitenkante, vorzugsweise jeweils genau eine Seitenkante, jedes Magnetflussleitelements begrenzt. Bevorzugt ist die innere Öffnung lediglich durch Teile der in einer Draufsicht auf die Magnetflussleiteinheit gesehenen jeweiligen linken Seitenkanten der Magnetflussleitelemente begrenzt. Alternativ kann die innere Öffnung lediglich durch Teile der in einer Draufsicht auf die Magnetflussleiteinheit gesehenen jeweiligen rechten Seitenkanten der Magnetflussleitelemente begrenzt sein. Besonders bevorzugt ist die innere Öffnung lediglich durch Teile der in einer Draufsicht auf die Magnetflussleiteinheit gesehenen Seitenkanten begrenzt, welche jeweils die Seitenkante der jeweiligen Magnetflussleitelemente ausbilden, die zumindest im Wesentlichen in einer Schließrichtung der Magnetflussleitelemente zu einem Schließen der inneren Öffnung liegen. Insbesondere ist ein Anteil einer Seitenkante, welcher die innere Öffnung begrenzt, proportional zu einem Durchmesser der inneren Öffnung. Insbesondere steigt ein Anteil einer Seitenkante, welcher die innere Öffnung begrenzt, stetig mit einem steigenden Durchmesser der inneren Öffnung und umgekehrt.

Des Weiteren wird vorgeschlagen, dass eine Differenz aus einem maximalen Außendurchmesser, innerhalb dessen alle Magnetflussleitelemente der Magnetflussleiteinheit in allen durch die Lagereinheit einstellbaren Positionen angeordnet sind und einem maximalen Öffnungsdurchmesser der inneren Öffnung höchstens 160 %, vorteilhaft höchstens 150 %, vorzugsweise höchstens 140 %, bevorzugt höchstens 130 % und besonders bevorzugt höchstens 120 % des maximalen Öffnungsdurchmessers und/oder einer maximalen Kantenlänge eines der Magnetflussleitelemente, insbesondere der Kantenlänge der Seitenkante des Magnetflussleitelements, welches die Öffnung begrenzt, beträgt. Dadurch kann vorteilhaft eine besonders kompakte und/oder platzsparende und dennoch flexibel einstellbare Magnetflussleiteinheit, insbesondere Abschirmeinheit, bereitgestellt werden. Dadurch können vorteilhaft Kosten und/oder Gewicht der Induktionsheizvorrichtung gering gehalten werden. Insbesondere ist der maximale Außendurchmesser als ein Durchmesser eines minimalen Umkreises ausgebildet, in welchem alle, insbesondere überlappungsfreien, Magnetflussleitelemente in allen möglichen Betriebszuständen der Magnetflussleiteinheit angeordnet sein können. Insbesondere ist der maximale Außendurchmesser der Außendurchmesser der Magnetflussleiteinheit in einem maximal geöffneten Zustand. Insbesondere ist der maximal geöffnete Zustand durch die Führungskulisse(n) vorgegeben. Insbesondere ist ein minimal geöffneter Zustand ebenfalls durch die Führungskulisse(n) vorgegeben. Insbesondere befinden sich die Magnetflussleitelemente in einem äußeren Anschlag der Führungskulisse(n), wenn der maximale Außendurchmesser der Magnetflussleiteinheit und/oder der maximale Öffnungsdurchmesser der inneren Öffnung eingestellt sind.

Zudem wird vorgeschlagen, dass insbesondere in der Draufsicht auf die Magnetflussleiteinheit gesehen, die Magnetflussleitelemente der Magnetflussleiteinheit in einer Zusammenschau, insbesondere abhängig von einer Position der Magnetflussleitelemente entlang der Führungskulissen, eine sägeblattartige Form oder eine Form eines Isogons, insbesondere mit einer Gesamtzahl an Magnetflussleitelementen der Magnetflussleiteinheit entsprechenden Anzahl an Ecken, ausbildet. Dadurch kann vorteilhaft eine besonders kompakte und/oder platzsparende und dennoch flexibel einstellbare Magnetflussleiteinheit, insbesondere Abschirmeinheit, bereitgestellt werden. Dadurch können vorteilhaft Kosten und/oder Gewicht der Induktionsheizvorrichtung gering gehalten werden. Unter einer "sägeblattartigen Form" soll insbesondere eine zumindest im Wesentlichen runde Form verstanden werden, welche an in Radialrichtung außen liegenden Kanten Sägezähne, insbesondere Sägezähne mit Hinterschneidungen in der Radialrichtung, aufweist. Insbesondere ist die sägeblattartige Form als eine einer Form einer seitlichen Silhouette eines Schaufelrads, wie es beispielsweise bei einem Schaufelradbagger zum Einsatz kommt, wesentlich ähnelnde Form ausgebildet.

Außerdem wird vorgeschlagen, dass insbesondere in der Draufsicht auf die Magnetflussleiteinheit gesehen, das Magnetflussleitelement eine Form eines, insbesondere spitzwinkligen, gleichschenkligen Dreiecks aufweist oder eine Form eines, insbesondere spitzwinkligen, gleichschenkligen Dreiecks, bei dem eine der Spitze des gleichschenkligen Dreiecks gegenüberliegende Ecke gerade oder rund abgeschnitten ist, aufweist. Dadurch kann vorteilhaft eine besonders kompakte und/oder platzsparende und dennoch flexibel einstellbare Magnetflussleiteinheit, insbesondere Abschirmeinheit, bereitgestellt werden. Dadurch können vorteilhaft Kosten und/oder Gewicht der Induktionsheizvorrichtung gering gehalten werden.

Wenn zudem die Magnetflussleiteinheit eine Abschirmeinheit zu einer Abschirmung des Induktionsmagnetfelds der Induktionsheizeinheit, insbesondere in Axialrichtung des Aufnahmebereichs der Induktionsheizeinheit, ausbildet, kann vorteilhaft eine effektive Abschirmung des Induktionsmagnetfelds erreicht werden, mit welcher vorteilhaft gewährleistet werden kann, dass sich die Werkzeugaufnahme erwärmt, also thermisch ausdehnt und zugleich ein in der Werkzeugaufnahme angeordnetes Werkzeug, welches ausgeschrumpft werden soll, sich möglichst nicht erwärmt, also möglichst nicht thermisch ausdehnt. Insbesondere bilden die Magnetflussleitelemente jeweils Abschirmelemente aus. Insbesondere ist die Abschirmeinheit zumindest dazu vorgesehen, das Induktionsmagnetfeld der Induktionsspule in der Axialrichtung der Induktionsheizeinheit, insbesondere in Richtung der Spulenachse der Induktionsspule, abzuschirmen, vorzugsweise von in der Werkzeugaufnahme eingebrachten Werkzeugen abzuschirmen. Unter einer "Abschirmung" eines Induktionsmagnetfelds soll insbesondere ein Abschirmen von zumindest 80%, vorzugsweise von zumindest 90 % und bevorzugt von zumindest 99 % des Induktionsmagnetfelds verstanden werden.

Des Weiteren wird vorgeschlagen, dass die Magnetflussleiteinheit in der Axialrichtung des Aufnahmebereichs oberhalb oder unterhalb der Induktionsspule der Induktionsheizeinheit, insbesondere aller Induktionsspulen der Induktionsheizeinheit, angeordnet ist. Dadurch kann vorteilhaft eine effektive Magnetflussleitung und/oder Abschirmung des Induktionsmagnetfelds in der Axialrichtung des Aufnahmebereichs der Induktionsheizeinheit erreicht werden. Insbesondere ist denkbar, dass die Induktionsheizvorrichtung eine weitere Magnetflussleiteinheit aufweist, welche insbesondere zumindest im Wesentlichen identisch zu der Magnetflussleiteinheit ausgebildet ist und welche vorzugsweise auf einer der Position der Magnetflussleiteinheit gegenüberliegenden Seite der Induktionsheizeinheit, insbesondere der Induktionsspule, angeordnet ist. Bevorzugt ist die Magnetflussleiteinheit in der Axialrichtung des Aufnahmebereichs oberhalb der Induktionsspule angeordnet. Zusätzlich kann die weitere Magnetflussleiteinheit insbesondere unterhalb der Induktionsspule angeordnet sein.

Wenn das Magnetflussleitelement der Magnetflussleiteinheit zumindest teilweise aus einer ferrimagnetischen Oxidkeramik ausgebildet ist, kann vorteilhaft eine besonders gute Magnetflussleitung und/oder Abschirmwirkung erzielt werden.

Zusätzlich wird vorgeschlagen, dass die Lagereinheit zwischen Endpositionen der Bewegungsbahnen zumindest eine Rastposition für die Magnetflussleiteinheit, insbesondere die Magnetflussleitelemente der Magnetflussleiteinheit, ausbildet. Dadurch kann vorteilhaft eine Einstellung eines passenden Öffnungsdurchmessers der inneren Öffnung auf ein Werkzeug und/oder auf eine Werkzeugaufnahme erleichtert werden, insbesondere im Fall einer manuellen Einstellung des Öffnungsdurchmessers. Vorteilhaft kann dadurch eine gute Abschirmung des Induktionsmagnetfelds gewährleistet werden. Vorteilhaft kann dadurch eine Beschädigung des Werkzeugs, der Werkzeugaufnahme und/oder der Magnetflussleiteinheit, insbesondere der Magnetflussleitelemente, beispielsweise durch ein Zusammenstoßen der Magnetflussleitelemente und des Werkzeugs und/oder der Werkzeugaufnahme, verhindert werden. Insbesondere weist die Lagereinheit zwischen den Endpositionen der Bewegungsbahnen eine Mehrzahl an Rastpositionen, vorzugsweise zumindest zehn Rastpositionen, auf. Vorzugsweise entsprechen die Rastpositionen Öffnungsdurchmessern der inneren Öffnung, welche auf normierte Werkzeugschaftdurchmesser, insbesondere auf normierte Werkzeugschaftdurchmesser von mittels eines Hydrodehn-Verfahrens spannbaren Werkzeugen, angepasst sind. Insbesondere entsprechen die Rastpositionen Öffnungsdurchmessern der inneren Öffnung, welche zumindest auf Werkzeugschaftdurchmesser von 4 mm, 6 mm, 8 mm, 10 mm, 12 mm, 14 mm, 16 mm, 20 mm, 25 mm und/oder 32 mm angepasst sind. Alternativ oder zusätzlich können die Rastpositionen auf normierte Zollgrößen, welche insbesondere zwischen den vorgenannten metrischen Größen liegen, angepasst sein. Insbesondere sind die Magnetflussleitelemente manuell oder automatisiert angetrieben in die Rastpositionen und/oder den Endpositionen verbringbar und/oder aus den Rastpositionen und/oder den Endpositionen lösbar.

Außerdem wird eine Ein- und/oder Ausschrumpfspannstation für Werkzeuge, insbesondere Einstell- und/oder Messgerät für Werkzeuge mit einer Ein- und/oder Ausschrumpfspannstation für Werkzeuge, mit der Induktionsheizvorrichtung vorgeschlagen. Dadurch kann vorteilhaft ein besonders effizientes, schnelles und/oder zuverlässiges Schrumpfspannen ermöglicht werden. Unter einer "Ein- und/oder Ausschrumpfspannstation für Werkzeuge" soll insbesondere eine Vorrichtung verstanden werden, welche dazu vorgesehen ist, einen Einschrumpfvorgang und/oder einen Ausschrumpfvorgang von Werkzeugen in Werkzeugaufnahmen zumindest zu einem Großteil automatisiert, vorzugsweise vollständig automatisiert, vorzunehmen. Der Einschrumpfvorgang umfasst insbesondere alle für eine Befestigung des Werkzeugs in der Werkzeugaufnahme notwendigen Schritte, insbesondere inklusive des Einsetzens und/oder Entnehmens von Werkzeug und Werkzeugaufnahme in und/oder aus der Ein- und/oder Ausschrumpfspannstation. Der Ausschrumpfvorgang umfasst insbesondere alle für ein Lösen des Werkzeugs aus der Werkzeugaufnahme notwendigen Schritte, insbesondere inklusive des Einsetzens und/oder Entnehmens von Werkzeug und Werkzeugaufnahme in und/oder aus der Ein- und/oder Ausschrumpfspannstation. Unter einem "Mess- und/oder Einstellgerät für Werkzeuge" soll insbesondere ein Gerät verstanden werden, welches zumindest dazu vorgesehen ist, zumindest eine Länge, zumindest einen Winkel, zumindest eine Kontur und/oder zumindest eine Außenform eines Werkzeugs zumindest teilweise zu erfassen und/oder einzustellen, vorzugsweise eine Einstellung, insbesondere eine Voreinstellung, eines Werkzeugs, insbesondere in der Werkzeugaufnahme, beispielsweise in Bezug auf eine zu der Werkzeugaufnahme relative Länge und/oder Lage vorzunehmen.

Wenn die Ein- und/oder Ausschrumpfspannstation und/oder die Induktionsheizeinheit eine motorisch angetriebene Verstelleinheit aufweist, welche dazu vorgesehen ist, zumindest das Magnetflussleitelement zumindest teilautomatisiert zur Einstellung des Öffnungsdurchmessers der inneren Öffnung der Magnetflussleiteinheit entlang der durch die Lagereinheit vorgegebenen Bewegungsbahnen zu bewegen, kann vorteilhaft eine einfache, zuverlässige und fehlerunanfällige Einstellung und/oder Anpassung der Magnetflussleiteinheit auf ein auszuschrumpfendes Werkzeug vorgenommen werden. Vorteilhaft kann durch eine Automatisierung eine Bearbeitungsgeschwindigkeit erhöht und damit Kosten gesenkt werden. Insbesondere umfasst die Ein- und/oder Ausschrumpfspannstation und/oder die Induktionsheizeinheit eine Steuer- und/oder Regeleinheit, welche zumindest dazu vorgesehen ist, die motorisch angetriebene Verstelleinheit zu steuern und/oder zu regeln und dabei vorzugsweise verschiedene Durchmessereinstellungen der Magnetflussleiteinheit, insbesondere verschiedene Rast- und/oder Endpositionen der Magnetflussleiteinheit programmgesteuert anzufahren. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Insbesondere erlaubt die motorisch angetriebene Verstelleinheit eine stufenlose Einstellung des Öffnungsdurchmessers der inneren Öffnung, vorzugsweise ohne Verwendung der Rastpositionen. Dadurch kann vorteilhaft individuell ein optimaler Öffnungsdurchmesser für jedes Werkzeug eingestellt werden. Insbesondere ist denkbar, dass die motorisch angetriebene Verstelleinheit den Öffnungsdurchmesser der inneren Öffnung durch eine Verstellung der Magnetflussleitelemente solange verringert bis, insbesondere mittels der Steuer- und/oder Regeleinheit, eine Berührung zwischen den Magnetflussleitelementen und dem Werkzeug und/oder der Werkzeugaufnahme detektiert wird.

Ferner wird ein Verfahren zum Betrieb einer Induktionsheizvorrichtung vorgeschlagen, bei welchem in zumindest einem Verfahrensschritt zumindest ein Teil einer in einem Aufnahmebereich der Induktionsheizeinheit angeordneten Werkzeugaufnahme in einem Ein- und/oder Ausschrumpfvorgang durch ein induktives Erhitzen aufgeweitet wird, wobei der Aufnahmebereich insbesondere parallel zu Drehachsen von in die Induktionsheizeinheit einsetzbaren Werkzeugaufnahmen ausgerichtet ist, wobei in zumindest einem weiteren Verfahrensschritt eine Ausbreitung eines Induktionsmagnetfelds der Induktionsheizeinheit in einer Axialrichtung des Aufnahmebereichs oberhalb und/oder unterhalb der Induktionsheizeinheit durch die Magnetflussleitelemente der Magnetflussleiteinheit abgeschirmt wird, und wobei zur Verstellung der Magnetflussleitelemente relativ zu der Werkzeugaufnahme alle Punkte des Magnetflussleitelements entlang Bewegungsbahnen bewegt werden, welche jeweils eine wesentliche Bewegungskomponente aufweisen, die senkrecht zu der Radialrichtung des Aufnahmebereichs und zugleich senkrecht zu der Axialrichtung des Aufnahmebereichs ausgerichtet ist.

Des Weiteren wird ein Verfahren zur Herstellung der Induktionsheizvorrichtung vorgeschlagen, wobei zumindest das Magnetflussleitelement in zumindest einem Verfahrensschritt zumindest teilweise durch ein additives Fertigungsverfahren, insbesondere durch ein 3D-Druckverfahren, hergestellt wird. Dadurch kann vorteilhaft eine besonders hohe Flexibilität bei der Herstellung und/oder bei der Ausgestaltung der Magnetflussleitelemente erreicht werden.

Die erfindungsgemäße Induktionsheizvorrichtung, die erfindungsgemäße Ein- und/oder Ausschrumpfspannstation und/oder die erfindungsgemäßen Verfahren sollen hierbei nicht auf die oben beschriebene Anwendung und Ausführungsform beschränkt sein. Insbesondere können die erfindungsgemäße Induktionsheizvorrichtung, die erfindungsgemäße Ein- und/oder Ausschrumpfspannstation und/oder die erfindungsgemäßen Verfahren zu einer Erfüllung einer hierin beschriebenen Funktionsweise eine von einer hierin genannten Anzahl von Verfahrensschritten, einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Ein- und/oder Ausschrumpfspannstation mit einer Induktionsheizvorrichtung und mit einem in einer Werkzeugaufnahme eingespannten Werkzeug,
- Fig. 2: eine schematische Darstellung einer Magnetflussleiteinheit der Induktionsheizvorrichtung in einer ersten Einstellung,
- Fig. 3: eine schematische Darstellung der Magnetflussleiteinheit in einer zweiten Einstellung,
- Fig. 4: eine schematische Darstellung der Magnetflussleiteinheit in einer dritten Einstellung,
- Fig. 5: eine schematische Darstellung der Magnetflussleiteinheit in einer vierten Einstellung,
- Fig. 6: ein schematisches Ablaufdiagramm eines Verfahrens zum Betrieb der Induktionsheizvorrichtung,
- Fig. 7: ein schematisches Ablaufdiagramm eines Verfahrens zur Herstellung der Induktionsheizvorrichtung,
- Fig. 8: eine schematische Darstellung einer alternativen Magnetflussleiteinheit einer alternativen Induktionsheizvorrichtung mit alternativen Magnetflussleitelementen,
- Fig. 9: eine schematische Darstellung einer weiteren alternativen Induktionsheizvorrichtung mit einer weiteren alternativen Magnetflussleiteinheit in einer ersten Einstellung,
- Fig. 10: eine schematische Darstellung der weiteren alternativen Induktionsheizvorrichtung mit der weiteren alternativen Magnetflussleiteinheit in einer zweiten Einstellung,
- Fig. 11: eine schematische perspektivische Unteransicht der weiteren alternativen Magnetflussleiteinheit und
- Fig. 12a-e: unterschiedliche schematische perspektivische Ansichten von Magnetflussleitelementen der alternativen Magnetflussleiteinheit.

### Beschreibung der Ausführungsbeispiele

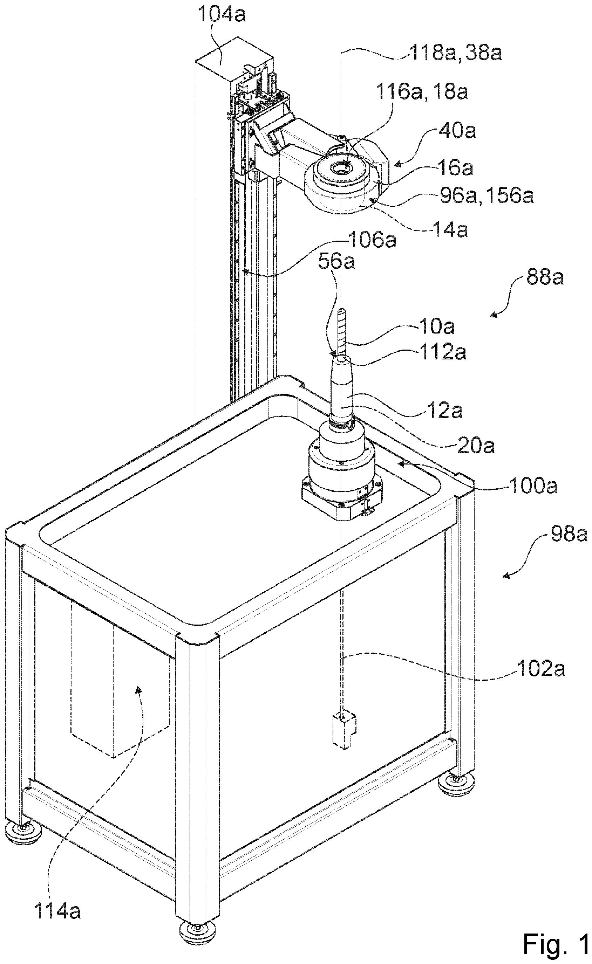

Die Fig. 1 zeigt eine Ein- und/oder Ausschrumpfspannstation 88a. Die Ein- und/oder Ausschrumpfspannstation 88a ist für Werkzeuge 10a vorgesehen. Die Ein- und/oder Ausschrumpfspannstation 88a ist als eine Schrumpfspannstation ausgebildet. Die Ein- und/oder Ausschrumpfspannstation 88a kann Teil eines Einstell- und/oder Messgeräts für Werkzeuge 10a und/oder Teil einer Multispann- und Mess- und/oder Einstellstation, wie sie beispielsweise in einer deutschen Patentanmeldung mit der Anmeldenummer 10 2019 115 607.6 beschrieben ist, sein.

Die Ein- und/oder Ausschrumpfspannstation 88a umfasst ein Basisgestell 98a an, in oder auf welchem die funktionalen Einheiten der Ein- und/oder Ausschrumpfspannstation 88a montiert sind. Die Ein- und/oder Ausschrumpfspannstation 88a umfasst eine Haltevorrichtung 100a für Werkzeugaufnahmen 12a. Die Haltevorrichtung 100a umfasst einen Längeneinstellpin 102a zu einer Voreinstellung einer Einstecktiefe für ein Werkzeug 10a in der Werkzeugaufnahme 12a. Der Längeneinstellpin 102a ist dazu vorgesehen, von unten in die Werkzeugaufnahme 12a eingeschoben zu werden und so einen Anschlag für ein Werkzeug 10a auszubilden, welches in einem Schrumpfspannvorgang in die Werkzeugaufnahme 12a eingeführt wird. Alternativ oder zusätzlich kann der Längeneinstellpin 102a in einem Ausspannvorgang dazu vorgesehen sein, von unten einen Druck auf ein Werkzeug 10a in der Werkzeugaufnahme 12a auszuüben, welcher das Werkzeug 10a aus der Werkzeugaufnahme 12a herausdrückt, sobald die Werkzeugaufnahme 12a weit genug thermisch aufgeweitet ist.

In der in Fig. 1 gezeigten Haltevorrichtung 100a ist die als Schrumpfspannfutter ausgebildete Werkzeugaufnahme 12a positioniert. In der in der Fig. 1 beispielhaft gezeigten Werkzeugaufnahme 12a ist ein beispielhaftes Werkzeug 10a fixiert. Das dargestellte Werkzeug 10a ist als ein Schaftwerkzeug, insbesondere als ein Schaftbohrer, ausgebildet. Das dargestellte Werkzeug 10a weist einen Werkzeugschaft 112a auf. Alternativ könnte das Werkzeug 10a auch als ein von einem Schaftbohrer verschiedenes Schaftwerkzeug ausgebildet sein. Das Werkzeug 10a ist dazu vorgesehen, in der Werkzeugaufnahme 12a befestigt, insbesondere thermisch eingespannt, zu werden. Die Werkzeugaufnahme 12a und das in der Werkzeugaufnahme 12a eingespannte Werkzeug 10a bilden eine montierte Werkzeugeinheit aus. Die Werkzeugaufnahme 12a weist eine vorgesehene Rotationsachse 20a auf. Die vorgesehene Rotationsachse 20a der Werkzeugaufnahme 12a ist als eine Achse ausgebildet, um welche die Werkzeugaufnahme 12a in einem Betrieb, beispielsweise in einem Zerspanbetrieb, rotiert wird. Die Rotationsachse 20a der Werkzeugaufnahme 12a kann eine Rotationssymmetrieachse der Werkzeugaufnahme 12a ausbilden. Ein Werkzeugaufnahmebereich der Werkzeugaufnahme 12a, in dem das Werkzeug 10a bei einem Einschrumpfvorgang fixiert wird, ist parallel zu der Rotationsachse 20a der Werkzeugaufnahme 12a ausgerichtet.

Die Ein- und/oder Ausschrumpfspannstation 88a umfasst eine Induktionsheizvorrichtung 40a. Die Ein- und/oder Ausschrumpfspannstation 88a umfasst einen Turm 104a. Der Turm 104a umfasst Lagerschienen 106a. Die Induktionsheizvorrichtung 40a ist linear entlang der Lagerschienen 106a auf- und ab bewegbar. Die Induktionsheizvorrichtung 40a ist entlang der Lagerschienen 106a auf die Haltevorrichtung 100a zu bewegbar. Die Ein- und/oder Ausschrumpfspannstation 88a kann eine Greifervorrichtung (nicht gezeigt) umfassen. Eine Greifervorrichtung ist dazu vorgesehen, ein Werkzeug 10a oder eine Werkzeugaufnahme 12a zu greifen und horizontal und vertikal relativ zu der Haltevorrichtung 100a zu bewegen. Eine Greifervorrichtung ist dazu vorgesehen, eine Werkzeugaufnahme 12a vollautomatisiert in die Haltevorrichtung 100a einzusetzen und/oder selbiges daraus zu entnehmen. Eine Greifervorrichtung ist dazu vorgesehen, ein Werkzeug 10a vollautomatisiert in eine Werkzeugaufnahme 12a, insbesondere das Schrumpfspannfutter, einzusetzen und/oder selbiges daraus zu entnehmen. Die Ein- und/oder Ausschrumpfspannstation 88a kann einen weiteren Turm aufweisen, an welchem die Greifervorrichtung linear vertikal beweglich gelagert ist. Zudem kann die Greifervorrichtung linear horizontal beweglich an dem weiteren Turm gelagert sein. Die Ein- und/oder Ausschrumpfspannstation 88a umfasst zudem eine Kühlstation (nicht gezeigt) zu einer Kühlung der aufgeheizten Werkzeugaufnahmen 12a.

Die Ein- und/oder Ausschrumpfspannstation 88a weist eine Steuer- und/oder Regeleinheit 114a auf. Die Steuer- und/oder Regeleinheit 114a ist zu einer Steuerung der, insbesondere automatisierten und/oder motorisierten, Bewegung der Induktionsheizvorrichtung 40a relativ zu dem Turm 104a vorgesehen. Die Steuer- und/oder Regeleinheit 114a ist zu einer, insbesondere automatisierten und/oder motorisierten, Steuerung einer Greifervorrichtung vorgesehen. Die Steuer- und/oder Regeleinheit 114a ist zu einer Steuerung der, insbesondere automatisierten und/oder motorisierten, Bewegung einer Greifervorrichtung relativ zu einem Turm 104a vorgesehen. Die Steuer- und/oder Regeleinheit 114a ist zu einer, insbesondere automatisierten und/oder motorisierten, Steuerung einer durch den Längeneinstellpin 102a erzeugten Druckkraft und/oder einer Position des Längeneinstellpins 102a, insbesondere relativ zu der Werkzeugaufnahme 12a, vorgesehen. Die Steuer- und/oder Regeleinheit 114a ist zu einer Steuerung einer Strom- und/oder Spannungszufuhr der Induktionsheizvorrichtung 40a vorgesehen. Die Ein- und/oder Ausschrumpfspannstation 88a weist eine motorisch angetriebene Verstelleinheit 96a auf. Die eine motorisch angetriebene Verstelleinheit 96a ist zu einer Einstellung interner Bauteile der Induktionsheizvorrichtung 40a vorgesehen. Die Steuer- und/oder Regeleinheit 114a ist zu einer Steuerung der motorisch angetriebenen Verstelleinheit 96a vorgesehen.

Die Induktionsheizvorrichtung 40a ist zu einem Ausschrumpfen von Werkzeugen 10a aus einer Werkzeugaufnahme 12a vorgesehen. Alternativ oder zusätzlich ist die Induktionsheizvorrichtung 40a zu einem Einschrumpfen von Werkzeugen 10a in eine Werkzeugaufnahme 12a vorgesehen. Die Induktionsheizvorrichtung 40a weist eine Induktionsheizeinheit 16a auf. Die Induktionsheizeinheit 16a umfasst eine Induktionsspule 14a. Die Induktionsspule 14a ist dazu vorgesehen, die Werkzeugaufnahme 12a thermisch aufzuweiten. Die Induktionsspule 14a ist dazu vorgesehen, über die Werkzeugaufnahme 12a und über das Werkzeug 10a gestülpt zu werden. Die Induktionsheizeinheit 16a bildet einen Aufnahmebereich 18a aus. Der Aufnahmebereich 18a der Induktionsheizeinheit 16a ist als eine zentrale, insbesondere vertikal ausgerichtete, vorzugsweise zumindest im Wesentlichen zylindrische oder konische, Öffnung 116a in der Induktionsheizeinheit 16a ausgebildet. Die Öffnung 116a des Aufnahmebereichs 18a erstreckt sich vollständig durch die Induktionsheizeinheit 16a. Der Aufnahmebereich 18a verläuft parallel zu einer Spulenachse 118a der Induktionsspule 14a. Der Aufnahmebereich 18a weist eine Axialrichtung 38a auf. Die Axialrichtung 38a des Aufnahmebereichs 18a verläuft parallel zu der Spulenachse 118a der Induktionsspule 14a. Der Aufnahmebereich 18a ist parallel zu der vorgesehenen Rotationsachse 20a der Werkzeugaufnahme 12a ausgerichtet, insbesondere wenn die Werkzeugaufnahme 12a in den Aufnahmebereich 18a eingesteckt ist und/oder wenn die Werkzeugaufnahme 12a in der Haltevorrichtung 100a der Ein- und/oder Ausschrumpfspannstation 88a positioniert ist. Die Induktionsheizeinheit 16a, insbesondere ein Induktionsmagnetfeld der Induktionsspule 14a, ist dazu vorgesehen, einen Teil einer in dem Aufnahmebereich 18a der Induktionsheizeinheit 16a angeordneten Werkzeugaufnahme 12a bei einem Ein- und/oder Ausschrumpfvorgang durch ein Erhitzen aufzuweiten.

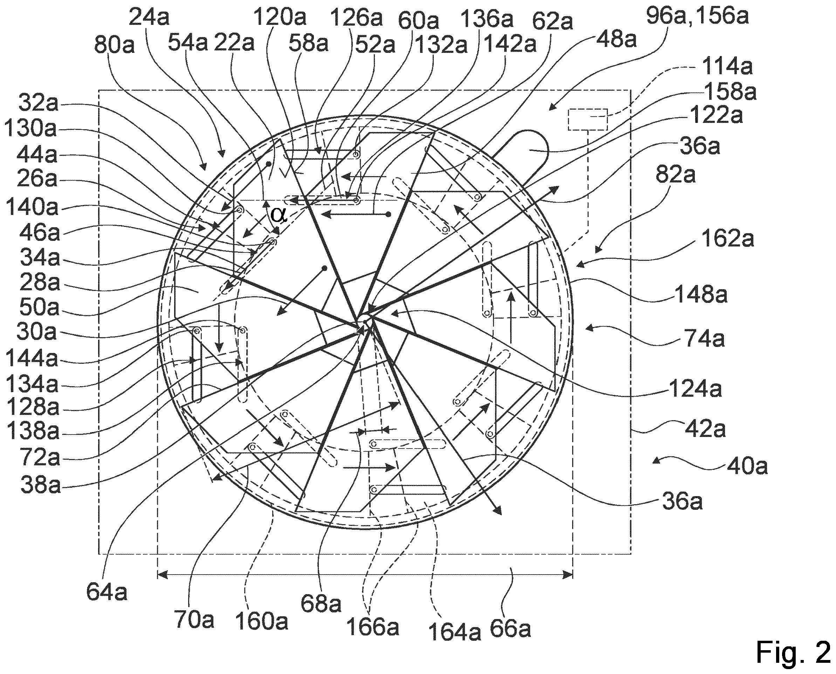

Die Induktionsheizvorrichtung 40a weist eine Magnetflussleiteinheit 24a auf. Die Magnetflussleiteinheit 24a ist zu einer Leitung des durch die Induktionsspule 14a erzeugten Magnetflusses, insbesondere der Magnetfeldlinien des durch die Induktionsspule 14a erzeugten Induktionsmagnetfelds, vorgesehen. Die Magnetflussleiteinheit 24a ist in der Axialrichtung 38a des Aufnahmebereichs 18a oberhalb der Induktionsspule 14a der Induktionsheizeinheit 16a angeordnet. Alternativ oder zusätzlich kann die Magnetflussleiteinheit 24a oder eine weitere Magnetflussleiteinheit (nicht gezeigt) unterhalb der Induktionsspule 14a der Induktionsheizeinheit 16a angeordnet sein. Die Magnetflussleiteinheit 24a bildet eine Abschirmeinheit 80a zu einer Abschirmung des Induktionsmagnetfelds der Induktionsspule 14a der Induktionsheizeinheit 16a aus. In der Fig. 2 ist die Magnetflussleiteinheit 24a schematisch dargestellt. Die Magnetflussleiteinheit 24a weist ein Magnetflussleitelement 22a auf. Die Magnetflussleiteinheit 24a weist weitere Magnetflussleitelemente 48a, 50a auf. Die weiteren Magnetflussleitelemente 48a, 50a sind in der Magnetflussleiteinheit 24a benachbart zu dem Magnetflussleitelement 22a angeordnet. Insgesamt weist die in der Fig. 2 beispielhaft dargestellte Magnetflussleiteinheit 24a acht Magnetflussleitelemente 22a, 48a, 50a auf. Dadurch kann vorteilhaft eine besonders dichte und/oder effektive Abschirmung des Induktionsmagnetfelds der Induktionsspule 14a erreicht werden. Von der Zahl acht abweichende Anzahlen von Magnetflussleitelementen 22a, 48a, 50a sind jedoch ebenfalls denkbar.

Die Magnetflussleitelemente 22a, 48a, 50a sind aus einer ferrimagnetischen Oxidkeramik ausgebildet. Die Magnetflussleitelemente 22a, 48a, 50a sind aus einem Ferritwerkstoff ausgebildet. Die Magnetflussleitelemente 22a, 48a, 50a bilden Abschirmelemente der Abschirmeinheit 80a aus. Jedes Magnetflussleitelement 22a, 48a, 50a der Magnetflussleiteinheit 24a bildet jeweils ein einzelnes Abschirmelement aus. Die Magnetflussleiteinheit 24a weist eine innere Öffnung 64a auf. Die innere Öffnung 64a der Magnetflussleiteinheit 24a ist in der Größe, insbesondere im Durchmesser, verstellbar. Die innere Öffnung 64a der Magnetflussleiteinheit 24a ist in der Größe, insbesondere im Durchmesser, stufenlos verstellbar. Die Magnetflussleitelemente 22a, 48a, 50a sind dazu vorgesehen, die in der Größe verstellbare innere Öffnung 64a auszubilden. Die Magnetflussleitelemente 22a, 48a, 50a sind dazu vorgesehen, ein zumindest teilweise in dem Aufnahmebereich 18a der Induktionsheizeinheit 16a angeordnetes Werkzeug 10a oder eine zumindest teilweise in dem Aufnahmebereich 18a der Induktionsheizeinheit 16a angeordnete Werkzeugaufnahme 12a derart im Umfang zu umschließen, dass die Umschließung, insbesondere unabhängig von einer Größe des Umfangs des umschlossenen Werkzeugs 10a oder der umschlossenen Werkzeugaufnahme 12a zumindest im Wesentlichen lückenfrei ist. Jedes Magnetflussleitelement 22a, 48a, 50a ist, insbesondere zumindest in der Axialrichtung 38a des Aufnahmebereichs 18a gesehen, überlappungsfrei mit jeglichen weiteren Magnetflussleitelementen 22a, 48a, 50a der Magnetflussleiteinheit 24a in der Induktionsheizeinheit 16a angeordnet. Benachbarte Magnetflussleitelemente 22a, 48a, 50a der Magnetflussleiteinheit 24a liegen in allen möglichen einstellbaren Anordnungen eng aneinander an. Die Magnetflussleitelemente 22a, 48a, 50a sind zueinander plan und/oder flächenbündig ausgerichtet. Die Werkzeugaufnahme 12a weist an einem oberen Ende einen Auslauf 56a auf. Der Auslauf 56a ist rund um eine Werkzeugaufnahmeöffnung der Werkzeugaufnahme 12a angeordnet. Die Magnetflussleitelemente 22a, 48a, 50a liegen in einem Abschirmzustand plan auf dem Auslauf 56a auf.

Die Magnetflussleitelemente 22a, 48a, 50a liegen in einer gemeinsamen Ebene, insbesondere in einer gemeinsamen Bewegungsebene 42a. Jedes Magnetflussleitelement 22a, 48a, 50a weist Abschirmflächen 120a auf. Die Abschirmflächen 120a bilden Oberseiten oder Unterseiten der Magnetflussleitelemente 22a, 48a, 50a. Die Abschirmflächen 120a der Magnetflussleitelemente 22a, 48a, 50a verlaufen senkrecht zu der Axialrichtung 38a des Aufnahmebereichs 18a. Die Abschirmflächen 120a der Magnetflussleitelemente 22a, 48a, 50a verlaufen parallel zu einer Radialrichtung 36a des Aufnahmebereichs 18a. Die Radialrichtungen 36a des Aufnahmebereichs 18a verlaufen strahlförmig radial von einer zentral durch den Aufnahmebereich 18a und parallel zu der Axialrichtung 38a verlaufenden Achse ausgehend nach außen. Die Radialrichtungen 36a des Aufnahmebereichs 18a verlaufen radial von der Spulenachse 118a ausgehend nach außen. Die Radialrichtungen 36a des Aufnahmebereichs 18a verlaufen senkrecht zu der Axialrichtung 38a und/oder senkrecht zu der Spulenachse 118a.

Jedes Magnetflussleitelement 22a, 48a, 50a weist eine Form eines spitzwinkligen gleichschenkligen Dreiecks auf, bei dem eine einer Spitze 122a des gleichschenkligen Dreiecks gegenüberliegende Ecke gerade abgeschnitten ist. Alternativ ist denkbar, dass zumindest ein Magnetflussleitelement 22a, 48a, 50a oder mehrere Magnetflussleitelemente 22a, 48a, 50a eine von der Form eines anderen Magnetflussleitelements 22a, 48a, 50a abweichende Form aufweist. Eine dem Aufnahmebereich 18a zugewandte Kante zumindest eines Magnetflussleitelements 22a, 48a, 50a der Magnetflussleiteinheit 24a, insbesondere die Spitze 122a eines oder mehrerer Magnetflussleitelements/ Magnetflussleitelemente 22a, 48a, 50a ist/sind durch eine Fase 124a gebrochen.

Dadurch kann vorteilhaft eine Art Trichterform der Magnetflussleitelemente 22a, 48a, 50a geschaffen werden, welche eine besonders vorteilhafte Magnetflussleitung, insbesondere Magnetfeldleitung, ermöglicht.

Die Induktionsheizvorrichtung 40a weist eine Lagereinheit 26a auf. Die Lagereinheit 26a ist zu einer beweglichen Lagerung der Magnetflussleitelemente 22a, 48a, 50a vorgesehen. Die Lagereinheit 26a gibt eine mögliche Bewegung der Magnetflussleitelemente 22a, 48a, 50a vor. Die Lagereinheit 26a bestimmt die Bewegungsfreiheitsgrade der Magnetflussleitelemente 22a, 48a, 50a. Zumindest ein Großteil aller Punkte jedes Magnetflussleitelements 22a, 48a, 50a, vorzugsweise alle Punkte jedes Magnetflussleitelements 22a, 48a, 50a, weisen eine durch die Lagereinheit 26a vorgegebene Bewegungsbahn 28a, 30a, 32a auf. Wenn ein Punkt eines Magnetflussleitelements 22a, 48a, 50a bei einer Bewegung zumindest eines anderen Punkts des Magnetflussleitelements 22a, 48a, 50a an einem gleichbleibenden Ort verharrt, dann weist dieser unbewegte Punkt keine Bewegungsbahn auf bzw. bildet keine Bewegungsbahn aus. Die Magnetflussleitelemente 22a, 48a, 50a sind unverschwenkbar gelagert. Die Lagereinheit 26a unterbindet ein Verschwenken der Magnetflussleitelemente 22a, 48a, 50a um alle möglichen Schwenkachsen. Jede der Bewegungsbahnen 28a, 30a, 32a verläuft zumindest zu einem Großteil, vorzugsweise vollständig, in der zu der Axialrichtung 38a des Aufnahmebereichs 18a zumindest im Wesentlichen senkrecht liegenden Ebene. Jede der Bewegungsbahnen 28a, 30a, 32a verläuft zumindest zu einem Großteil, vorzugsweise vollständig, in der Bewegungsebene 42a. Jede der Bewegungsbahnen 28a, 30a, 32a weist eine wesentliche Bewegungskomponente 34a auf, welche senkrecht zu der Radialrichtung 36a des Aufnahmebereichs 18a und zugleich senkrecht zu der Axialrichtung 38a des Aufnahmebereichs 18a ausgerichtet ist. Jede der Bewegungsbahnen 28a, 30a, 32a, insbesondere jede Bewegungsbahn 28a, 30a, 32a aller der Punkte der Magnetflussleitelemente 22a, 48a, 50a, welche eine Bewegungsbahn 28a, 30a, 32a aufweisen, weist eine wesentliche Bewegungskomponente 34a auf, welche senkrecht zu allen in einer gemeinsamen Ebene (Radialebene) liegenden Radialrichtung 36a des Aufnahmebereichs 18a, insbesondere senkrecht zu allen denkbaren Radialrichtungen 36a, die in einem Strauß von allen möglichen von der Axialrichtung 38a ausgehenden und in einer gemeinsamen Ebene (Radialebene) liegenden Radialrichtungen 36a umfasst sind, und zugleich senkrecht zu der Axialrichtung 38a des Aufnahmebereichs 18a ausgerichtet ist. Die Magnetflussleitelemente 22a, 48a, 50a sind dazu vorgesehen durch Bewegungen entlang der Bewegungsbahnen 28a, 30a, 32a die Größe, insbesondere den Durchmesser, der inneren Öffnung 64a (kontinuierlich) zu ändern.

Zumindest eine der Bewegungsbahnen 28a, 30a, 32a ist eine rein lineare Bewegungsbahn. In dem in den Figuren 2 bis 5 gezeigten Ausführungsbeispiel sind alle Bewegungsbahnen 28a, 30a, 32a rein lineare Bewegungsbahnen. Die zumindest eine rein lineare Bewegungsbahn verläuft zumindest im Wesentlichen senkrecht zu der Radialrichtung 36a des Aufnahmebereichs 18a der Induktionsheizeinheit 16a. In dem in den Figuren 2 bis 5 gezeigten Ausführungsbeispiel verlaufen alle Bewegungsbahnen zumindest im Wesentlichen senkrecht zu der Radialrichtung 36a des Aufnahmebereichs 18a der Induktionsheizeinheit 16a. Eine gerade Verlängerung 52a einer der rein linearen Bewegungsbahnen 28a der durch die Lagereinheit 26a vorgegebenen Schar von Bewegungsbahnen 28a, 30a, 32a des Magnetflussleitelements 22a schließt mit einer geraden Verlängerung 54a einer weiteren rein linearen Bewegungsbahn 60a einer durch die Lagereinheit 26a vorgegebenen weiteren Schar von weiteren Bewegungsbahnen 60a, 62a des weiteren Magnetflussleitelements 48a einen Winkel α ein. Der Winkel α genügt der Formel α = 360°/N_{M}, wobei N_{M} einer Gesamtanzahl aller Magnetflussleitelemente 22a, 48a, 50a der Magnetflussleiteinheit 24a entspricht. Im beispielhaft dargestellten Fall der Fig. 2 bis 5 gilt N_{M} = 8 und somit α = 45°.

Die Lagereinheit 26a weist eine dem Magnetflussleitelement 22a zugeordnete Kulissenführung 44a auf. Die Kulissenführung 44a ist zu einer Einschränkung einer Bewegungsfreiheit zumindest des Magnetflussleitelements 22a, 48a, 50a vorgesehen. Jedes Magnetflussleitelement 22a, 48a, 50a der Magnetflussleiteinheit 24a weist eine zugehörige Kulissenführung 44a, 126a, 128a auf. Die Kulissenführungen 44a, 126a, 128a sind jeweils als Führungsschienen ausgebildet. Die Magnetflussleitelemente 22a, 48a, 50a, insbesondere monolithische Fortsätze der Magnetflussleitelemente 22a, 48a, 50a oder an den Magnetflussleitelementen 22a, 48a, 50a angebrachte Pins 130a, 132a, 134a (oder dergleichen), greifen zur Führung der Magnetflussleitelemente 22a, 48a, 50a zumindest teilweise in die jeweils zugehörige Kulissenführung 44a, 126a, 128a ein. Die Kulissenführungen 44a, 126a, 128a, insbesondere die Führungsschienen der Kulissenführungen 44a, 126a, 128a, weisen einen geraden Verlauf auf.

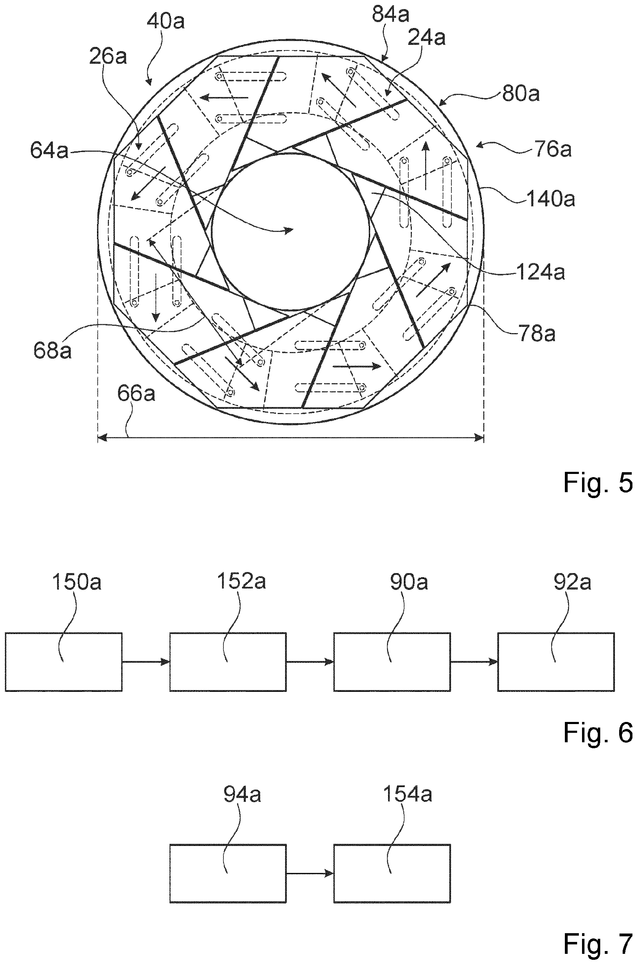

Die Lagereinheit 26a weist eine dem Magnetflussleitelement 22a zugeordnete, zweite Kulissenführung 46a auf. Die zweite Kulissenführung 46a ist zu einer weiteren Einschränkung der Bewegungsfreiheit des Magnetflussleitelements 22a vorgesehen. Die zweite Kulissenführung 46a ist zu einer Verhinderung einer freien Rotation des Magnetflussleitelements 22a vorgesehen. Die zweite Kulissenführung 46a ist zumindest im Wesentlichen parallel zu der Kulissenführung 44a ausgerichtet. Jedes Magnetflussleitelement 22a, 48a, 50a der Magnetflussleiteinheit 24a weist eine zugehörige zweite Kulissenführung 46a, 136a, 138a auf. Jede der zweiten Kulissenführungen 46a, 136a, 138a ist jeweils zumindest im Wesentlichen parallel zu der jeweiligen zu demselben Magnetflussleitelement 22a, 48a, 50a zugehörigen Kulissenführung 44a, 126a, 128a ausgerichtet. Die zweiten Kulissenführungen 46a, 136a, 138a sind jeweils als Führungsschienen ausgebildet. Die Magnetflussleitelemente 22a, 48a, 50a, insbesondere zweite monolithische Fortsätze der Magnetflussleitelemente 22a, 48a, 50a oder an den Magnetflussleitelementen 22a, 48a, 50a angebrachte weitere Pins 140a, 142a, 144a (oder dergleichen) greifen zur Führung der Magnetflussleitelemente 22a, 48a, 50a zumindest teilweise in die jeweils zugehörige zweite Kulissenführung 46a, 136a, 138a ein. Die zweiten Kulissenführungen 46a, 136a, 138a, insbesondere die Führungsschienen der zweiten Kulissenführungen 46a, 136a, 138a, weisen einen geraden Verlauf auf. Die Magnetflussleitelemente 22a, 48a, 50a weisen jeweils zwei durch die Lagereinheit 26a, insbesondere durch die Kulissenführungen 44a, 46a, 126a, 128a, 136a, 138a, vorgegebene Endpositionen 82a, 84a auf. Die Endpositionen 82a stellen Extremalpositionen der Magnetflussleitelemente 22a, 48a, 50a innerhalb der Magnetflussleiteinheit 24a dar. In der Darstellung der Fig. 2 befinden sich die Magnetflussleitelemente 22a, 48a, 50a in der ersten Endposition 82a. Die innere Öffnung 64a der Magnetflussleiteinheit 24a weist einen minimalen Öffnungsdurchmesser 68a auf, wenn sich die Magnetflussleitelemente 22a, 48a, 50a in der ersten Endposition 82a befinden. Der minimale Öffnungsdurchmesser 68a beträgt in der beispielhaften Darstellung von Fig. 2 etwa 4 mm. Die Magnetflussleitelemente 22a, 48a, 50a der Magnetflussleiteinheit 24a bilden in der ersten Endposition 82a in einer Zusammenschau eine sägeblattartige Form 74a aus. In der Darstellung der Fig. 5 befinden sich die Magnetflussleitelemente 22a, 48a, 50a in der zweiten Endposition 84a. Die innere Öffnung 64a der Magnetflussleiteinheit 24a weist einen maximalen Öffnungsdurchmesser 68a auf, wenn sich die Magnetflussleitelemente 22a, 48a, 50a in der zweiten Endposition 84a befinden. Der maximale Öffnungsdurchmesser 68a beträgt in der beispielhaften Darstellung von Fig. 5 etwa 45 mm. Die Magnetflussleitelemente 22a, 48a, 50a der Magnetflussleiteinheit 24a bilden in der zweiten Endposition 84a eine Form eines Isogons 76a aus. Das durch die Magnetflussleitelemente 22a, 48a, 50a ausgebildete Isogon 76a weist eine Anzahl an Ecken 78a auf, welche einer Gesamtzahl an Magnetflussleitelementen 22a, 48a, 50a der Magnetflussleiteinheit 24a entspricht. Die Magnetflussleiteinheit 24a weist in der zweiten Endposition 84a einen maximalen Außendurchmesser 66a auf. Der maximale Außendurchmesser 66a der Magnetflussleiteinheit 24a entspricht einem Durchmesser eines Kreises 148a, innerhalb dem alle Magnetflussleitelemente 22a, 48a, 50a der Magnetflussleiteinheit 24a in allen durch die Lagereinheit 26a einstellbaren Anordnungen umfasst sind. Der maximale Außendurchmesser 66a entspricht in den beispielhaften Darstellungen aus den Fig. 2 bis 5 etwa 110 mm. Eine Differenz aus dem maximalen Außendurchmesser 66a und dem maximalen Öffnungsdurchmesser 68a der inneren Öffnung 64a beträgt höchstens 160 % des maximalen Öffnungsdurchmessers 68a. Jedes Magnetflussleitelement 22a, 48a, 50a weist zumindest eine längste Seitenkante 72a auf. Die längste Seitenkante 72a weist eine Kantenlänge auf, welche die maximale Kantenlänge 70a aller Kantenlängen der Magnetflussleitelemente 22a, 48a, 50a darstellt. Eine Differenz aus dem maximalen Außendurchmesser 66a und dem maximalen Öffnungsdurchmesser 68a der inneren Öffnung 64a beträgt höchstens 160 % der maximalen Kantenlänge 70a der längsten Seitenkante 72a eines der Magnetflussleitelemente 22a, 48a, 50a, insbesondere aller Magnetflussleitelemente 22a, 48a, 50a. Die motorische Verstelleinheit 96a ist dazu vorgesehen, die Magnetflussleitelemente 22a, 48a, 50a automatisiert zur Einstellung der Öffnungsdurchmessers 68a der inneren Öffnung 64a entlang der durch die Lagereinheit 26a vorgegebenen Bewegungsbahnen 28a, 30a, 32a zu bewegen. Die Magnetflussleitelemente 22a, 48a, 50a weisen zumindest an Berührungskanten jeweils eine Gleitfläche 58a auf. Die Gleitfläche 58a ist als eine Gleitbeschichtung ausgebildet.

Die Lagereinheit 26a bildet zwischen den beiden Endpositionen 82a, 84a der Bewegungsbahnen 28a, 30a, 32a für die Magnetflussleiteinheit 24a, insbesondere für jedes Magnetflussleitelement 22a, 48a, 50a, zumindest eine Rastposition 86a, 146a aus. In den Rastpositionen 86a, 146a ist jeweils ein selbstständiges Lösen oder Verrutschen eines oder mehrerer Magnetflussleitelemente 22a, 48a, 50a unterbunden. Die Lagereinheit 26a weist Rastelemente (nicht gezeigt) auf, welche zur Sicherung der Positionierung der Magnetflussleitelemente 22a, 48a, 50a mit den Magnetflussleitelementen 22a, 48a, 50a und/oder mit den Pins 130a, 132a, 134a, 140a, 142a, 144a der Magnetflussleitelemente 22a, 48a, 50a verrasten. Die Induktionsheizvorrichtung 40a, insbesondere die motorische Verstelleinheit 96a, weist eine Antriebseinheit 156a auf. Die Antriebseinheit 156a ist zu einem manuell angetriebenen und/oder einem motorisch angetriebenen Antrieb der Bewegung der Magnetflussleitelemente 22a, 48a, 50a vorgesehen. Die Antriebseinheit 156a umfasst ein manuelles Antriebselement 158a. Das manuelle Antriebselement 158a bildet einen Hebel und/oder einen Griff aus, mittels welchem ein Bediener die Bewegung der Magnetflussleitelemente 22a, 48a, 50a erzeugen und/oder vornehmen kann. Das manuelle Antriebselement 158a wechselwirkt mit den Rastelementen (nicht gezeigt) der Lagereinheit 26a. Dadurch kann vorteilhaft eine einfache Einstellung vorgegebener Rastpositionen 82a, 84a, 86a, 146a der Lagereinheit 26a vorgenommen und eine Fehlbedienung vermieden werden. Alternativ oder zusätzlich umfasst die Antriebseinheit 156a ein motorisches Antriebselement 160a. Das motorische Antriebselement 160a ist als ein Motor, beispielsweise ein Elektromotor oder ein hydraulisch oder pneumatisch angetriebener Motor ausgebildet. Das motorische Antriebselement 160a ist automatisiert mittels der Steuer- und/oder Regeleinheit 114a ansteuerbar. Das motorische Antriebselement 160a ist zu einer automatisierten Einstellung der Bewegung und/oder der Position der Magnetflussleitelemente 22a, 48a, 50a vorgesehen. Das motorische Antriebselement 160a ist zu einer stufenlosen Einstellung der Position der Magnetflussleitelemente 22a, 48a, 50a vorgesehen. Die Steuer- und/oder Regeleinheit 114a ist dazu vorgesehen, ein in Kontakt treten der Magnetflussleitelemente 22a, 48a, 50a mit einem Werkzeugschaft 112a zu detektieren. Die Steuer- und/oder Regeleinheit 114a ist dazu vorgesehen, eine durch die Magnetflussleitelemente 22a, 48a, 50a auf den Werkzeugschaft 112a ausgeübte Kraft einzustellen. Das motorische Antriebselement 160a ist dazu vorgesehen, die Magnetflussleitelemente 22a, 48a, 50a derart zu steuern, dass die Magnetflussleiteinheit 24a eine Werkzeuggreiferfunktion ausüben kann. Die Magnetflussleiteinheit 24a bildet in diesem Fall eine Werkzeuggreifereinheit 162a aus. Die Antriebseinheit 156a umfasst eine rotierbare Antriebsscheibe 164a. Die rotierbare Antriebsscheibe 164a ist mittels dem motorischen Antriebselement 160a und/oder mittels dem manuellen Antriebselement 158a rotatorisch bewegbar, insbesondere antreibbar. Die Antriebsscheibe 164a weist Anschläge 166a auf. Die Anschläge 166a sind dazu vorgesehen mit Pins 130a, 132a, 134a der Magnetflussleitelemente 22a, 48a, 50a wechselzuwirken und dadurch die Magnetflussleitelemente 22a, 48a, 50a entlang der Kulissenführungen 44a, 126a, 128a zu bewegen, insbesondere zu schieben.

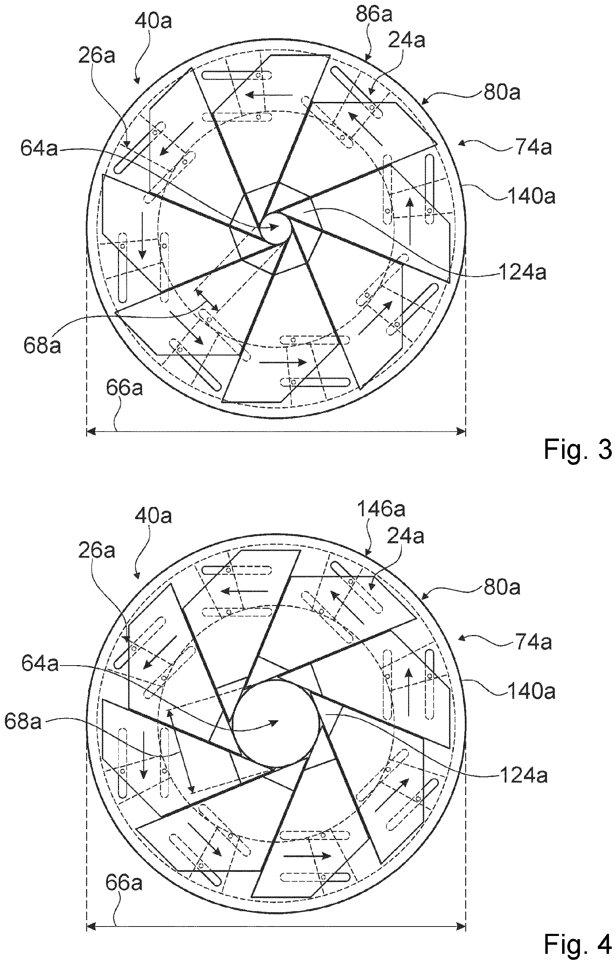

In der Fig. 3 sind die Magnetflussleitelemente 22a, 48a, 50a in einer beispielhaften ersten Rastposition 86a dargestellt. Der Öffnungsdurchmesser 68a beträgt in dem Beispiel aus der Fig. 3 etwa 10 mm. Die Magnetflussleitelemente 22a, 48a, 50a der Magnetflussleiteinheit 24a bilden in der ersten Rastposition 86a in der Zusammenschau eine sägeblattartige Form 74a aus. In der Fig. 4 sind die Magnetflussleitelemente 22a, 48a, 50a in einer beispielhaften zweiten Rastposition 146a dargestellt. Der Öffnungsdurchmesser 68a beträgt in dem Beispiel aus der Fig. 4 etwa 25 mm. Die Magnetflussleitelemente 22a, 48a, 50a der Magnetflussleiteinheit 24a; 24b bilden in der zweiten Rastposition 146a in der Zusammenschau eine sägeblattartige Form 74a aus.

Fig. 6 zeigt ein Ablaufdiagramm eines Verfahrens zum Betrieb der Induktionsheizvorrichtung 40a. In zumindest einem Verfahrensschritt 150a wird eine eine Werkzeugaufnahme 12a und ein Werkzeug 10a umfassende montierte Werkzeugeinheit in die Haltevorrichtung 100a der Ein- und/oder Ausschrumpfspannstation 88a eingesetzt. In zumindest einem weiteren Verfahrensschritt 152a wird die Induktionsheizeinheit 16a, insbesondere die Induktionsspule 14a, über die montierte Werkzeugeinheit gestülpt. In dem Verfahrensschritt 152a wird die Werkzeugaufnahme 12a zumindest teilweise in den Aufnahmebereich 18a der Induktionsheizeinheit 16a verbracht. In zumindest einem weiteren Verfahrensschritt 90a wird zumindest ein Teil der in dem Aufnahmebereich 18a der Induktionsheizeinheit 16a angeordneten Werkzeugaufnahme 12a in einem Ein- und/oder Ausschrumpfvorgang durch ein induktives Erhitzen aufgeweitet. In dem Verfahrensschritt 90a wird durch die Induktionsheizeinheit 16a ein Induktionsmagnetfeld erzeugt. In zumindest einem weiteren Verfahrensschritt 92a wird eine Ausbreitung des Induktionsmagnetfelds der Induktionsheizeinheit 16a in der Axialrichtung 38a des Aufnahmebereichs 18a oberhalb und/oder unterhalb der Induktionsheizeinheit 16a durch die Magnetflussleitelemente 22a, 48a, 50a der Magnetflussleiteinheit 24a abgeschirmt. In dem Verfahrensschritt 92a werden die Magnetflussleitelemente 22a, 48a, 50a derart verschoben, dass sich der Öffnungsdurchmesser 68a der inneren Öffnung 64a der Magnetflussleiteinheit 24a verändert und vorzugsweise an einen Durchmesser des Werkzeugschafts 112a des Werkzeugs 10a anpasst. In dem Verfahrensschritt 92a werden zum Verstellen der Position der Magnetflussleitelemente 22a, 48a, 50a relativ zu der Werkzeugaufnahme 12a alle Punkte des Magnetflussleitelements 22a, 48a, 50a entlang der Bewegungsbahnen 28a, 30a, 32a bewegt, welche jeweils eine wesentliche Bewegungskomponente 34a aufweisen, die senkrecht zu der Radialrichtung 36a des Aufnahmebereichs 18a und zugleich senkrecht zu der Axialrichtung 38a des Aufnahmebereichs 18a ausgerichtet ist.

Fig. 7 zeigt ein Ablaufdiagramm eines Verfahrens zur Herstellung der Induktionsheizvorrichtung 40a. In zumindest einem Verfahrensschritt 94a werden die Magnetflussleitelemente 22a, 48a, 50a zumindest teilweise durch ein additives Fertigungsverfahren hergestellt. In dem Verfahrensschritt 94a werden die Magnetflussleitelemente 22a, 48a, 50a durch ein 3D-Druckverfahren hergestellt. In zumindest einem weiteren Verfahrensschritt 154a werden die Magnetflussleitelemente 22a, 48a, 50a in die Induktionsheizeinheit 16a eingebaut.

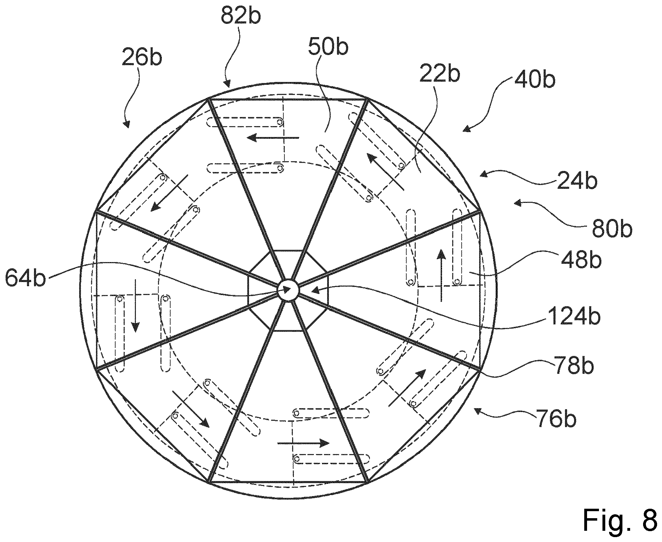

In der Figur 8 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In dem Ausführungsbeispiel der Figur 8 ist der Buchstabe a durch den Buchstaben b ersetzt.

Fig. 8 zeigt eine alternative Induktionsheizvorrichtung 40b mit einer alternativen Magnetflussleiteinheit 24b. Die Magnetflussleiteinheit 24b weist alternative Magnetflussleitelemente 22b, 48b, 50b auf. Die Magnetflussleitelemente 22b, 48b, 50b weisen eine Form eines spitzwinkligen, gleichschenkligen Dreiecks auf. Alternativ könnten die Magnetflussleitelemente 22b, 48b, 50b auch weitere Dreiecksformen aufweisen, beispielsweise asymmetrische Dreiecksformen.

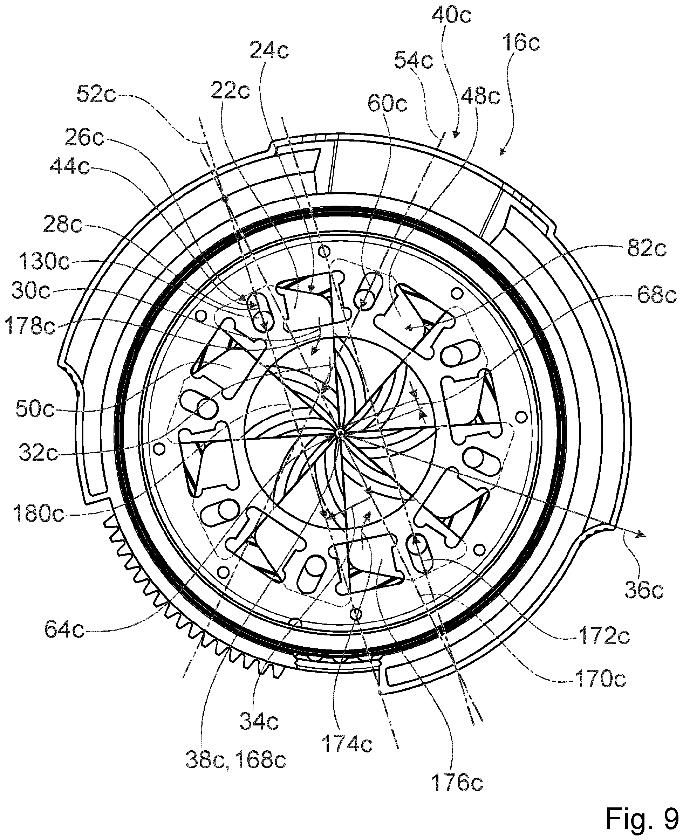

Die Fig. 9 zeigt schematisch eine Unteransicht einer weiteren alternativen Induktionsheizvorrichtung 40c mit einer weiteren alternativen Magnetflussleiteinheit 24c. Die Magnetflussleiteinheit 24c weist Magnetflussleitelemente 22c, 48c, 50c, 176c auf. Die Magnetflussleitelemente 22c, 48c, 50c, 176c befinden sich in der Darstellung der Fig. 9 in einer ersten Endposition 82c, in der eine innere Öffnung 64c der Magnetflussleiteinheit 24c einen minimalen Öffnungsdurchmesser 68c aufweist. Die in der Fig. 9 dargestellten Magnetflussleitelemente 22c, 48c, 50c, 176c sind abgesehen von einer Ausbildung (insbesondere Anzahl und Anordnung) von Pins 130c der Magnetflussleitelemente 22c, 48c, 50c, 176c zumindest im Wesentlichen identisch zu den in den Figuren 2 bis 5 dargestellten Magnetflussleitelementen 22a, 48a, 50a ausgebildet. Die Induktionsheizvorrichtung 40c weist eine Lagereinheit 26c zu einer beweglichen Lagerung der Magnetflussleitelemente 22c, 48c, 50c auf. Die Lagereinheit 26c umfasst zu jedem der Magnetflussleitelemente 22c, 48c, 50c der Magnetflussleiteinheit 24c genau eine als gerade Führungsschiene ausgebildete Kulissenführung 44c. Die Pins 130c der Magnetflussleitelemente 22c, 48c, 50c greifen zur Führung der Magnetflussleitelemente 22c, 48c, 50c zumindest teilweise in die Führungsschienen ein. Die in der Fig. 9 dargestellten Magnetflussleitelemente 22c, 48c, 50c sind um eine, insbesondere durch den Pin 130c verlaufende, Achse, insbesondere in einer Ebene, die senkrecht zu einer Axialrichtung 38c eines Aufnahmebereichs 18c einer die Magnetflussleiteinheit 24c umfassenden Induktionsheizeinheit 16c der Induktionsheizvorrichtung 40c liegt, schwenkbar. Die Führungsschienen sind gewinkelt zu einer Radialrichtung 36c des Aufnahmebereichs 18c angeordnet. Die Führungsschienen sind in der Ebene, die senkrecht zu der Axialrichtung 38c des Aufnahmebereichs 18c verläuft, gewinkelt zu einer senkrecht zu der Radialrichtung 36c des Aufnahmebereichs 18c stehenden Richtung angeordnet.

Zumindest ein Großteil aller Punkte jedes Magnetflussleitelements 22c, 48c, 50c, 176c, vorzugsweise alle Punkte jedes Magnetflussleitelements 22c, 48c, 50c, 176c, weisen eine durch die Lagereinheit 26c vorgegebene Bewegungsbahn 28c, 30c, 32c, 172c, 174c auf. Jede der Bewegungsbahnen 28c, 30c, 32c, 172c, 174c, insbesondere jede Bewegungsbahn 28c, 30c, 32c, 172c, 174c aller der Punkte der Magnetflussleitelemente 22c, 48c, 50c, 176c, welche eine Bewegungsbahn 28c, 30c, 32c, 172c, 174c aufweisen, weist eine wesentliche Bewegungskomponente 34c auf, welche senkrecht zu der Radialrichtung 36c des Aufnahmebereichs 18c, insbesondere senkrecht zu allen in einer gemeinsamen Ebene (Radialebene) liegenden denkbaren Radialrichtungen 36c des Aufnahmebereichs 18c, und zugleich senkrecht zu der Axialrichtung 38c des Aufnahmebereichs 18c ausgerichtet ist. Die Bewegungskomponente 34c entspricht im in der Fig. 9 dargestellten Fall etwa 15 % einer Gesamtbewegung 180c, insbesondere einer Gesamtbewegungsrichtung und/oder -komponente, vorzugsweise bei einer orthogonalen Vektorzerlegung der Gesamtbewegung 180c, wie sie in der Fig. 9 beispielhaft gezeigt ist. Zumindest eine der Bewegungsbahnen 28c, 30c, 32c, 172c, 174c ist eine rein lineare Bewegungsbahn 28c, 172c, 174c. In dem in den Figuren 9 bis 11 gezeigten Ausführungsbeispiel sind nur die Bewegungsbahnen 28c, 172c, 174c eines sich unterhalb eines Zentrums des jeweiligen Pins 130c befindenden Punkts der jeweiligen Magnetflussleitelemente 22c, 48c, 50c, 176c rein lineare Bewegungsbahnen. Die Punkte der jeweiligen Magnetflussleitelemente 22c, 48c, 50c, 176c, welche rein lineare Bewegungsbahnen beschreiben, stellen zudem die Punkte der jeweiligen Magnetflussleitelemente 22c, 48c, 50c, 176c dar, um welche sich die jeweiligen Magnetflussleitelemente 22c, 48c, 50c, 176c während der Verstellbewegung der Magnetflussleitelemente 22c, 48c, 50c, 176c verschwenken. Die Magnetflussleitelemente 22c, 48c, 50c, 176c weisen einen beweglich gelagerten Schwenkpunkt auf. Die Magnetflussleitelemente 22c, 48c, 50c, 176c führen eine Kombination aus Translations- und Schwenkbewegung aus. Mit Ausnahme der Punkte der jeweiligen Magnetflussleitelemente 22c, 48c, 50c, 176c, welche rein lineare Bewegungsbahnen beschreiben, führen alle weiteren Punkte der jeweiligen Magnetflussleitelemente 22c, 48c, 50c, 176c während der Verstellbewegung eine (gleichgerichtete) Schwenkbewegung aus. Ein Großteil aller weiteren Bewegungsbahnen 30c, 32c, insbesondere alle weiteren Bewegungsbahnen 30c, 32c, sind gekrümmt. Ein Großteil aller weiteren Bewegungsbahnen 30c, 32c, insbesondere alle weiteren Bewegungsbahnen 30c, 32c, weisen eine Krümmung 178c auf. Die Krümmung 178c der gekrümmten Bewegungsbahnen 30c, 32c nimmt bei einer Bewegung des zugehörigen Magnetflussleitelements 22c in Richtung eines Zentrums 168c der Induktionsheizeinheit 16c zu. Das Zentrum 168c der Induktionsheizeinheit 16c entspricht insbesondere einem Zentrum der inneren Öffnung 64c der Magnetflussleiteinheit 24c. Die Zunahme der Krümmung 178c der gekrümmten Bewegungsbahnen 30c, 32c ist dabei umso größer, umso näher das zugehörige Magnetflussleitelement 22c dem Zentrum 168c der Induktionsheizeinheit 16c ist.

Eine gerade Verlängerung 52c der rein linearen Bewegungsbahn 28c der durch die Lagereinheit 26c vorgegebenen Schar von Bewegungsbahnen 28c, 30c, 32c des Magnetflussleitelements 22c verläuft parallel zu einer geraden Verlängerung 170c einer zusätzlichen weiteren rein linearen Bewegungsbahn 172c der durch die Lagereinheit 26c vorgegebenen weiteren Schar von weiteren Bewegungsbahnen 172c, 174c des zusätzlichen weiteren Magnetflussleitelements 176c der Magnetflussleiteinheit 24c. Die gerade Verlängerung 52c der rein linearen Bewegungsbahn 28c des Magnetflussleitelements 22c und die gerade Verlängerung 170c der zusätzlichen weiteren rein linearen Bewegungsbahn 172c der durch die Lagereinheit 26c vorgegebenen weiteren Schar von weiteren Bewegungsbahnen 172c, 174c des zusätzlichen weiteren Magnetflussleitelements 176c verlaufen auf gegenüberliegenden Seiten der Axialrichtung 38c und/oder des Zentrums 168c der Magnetflussleiteinheit 24c.

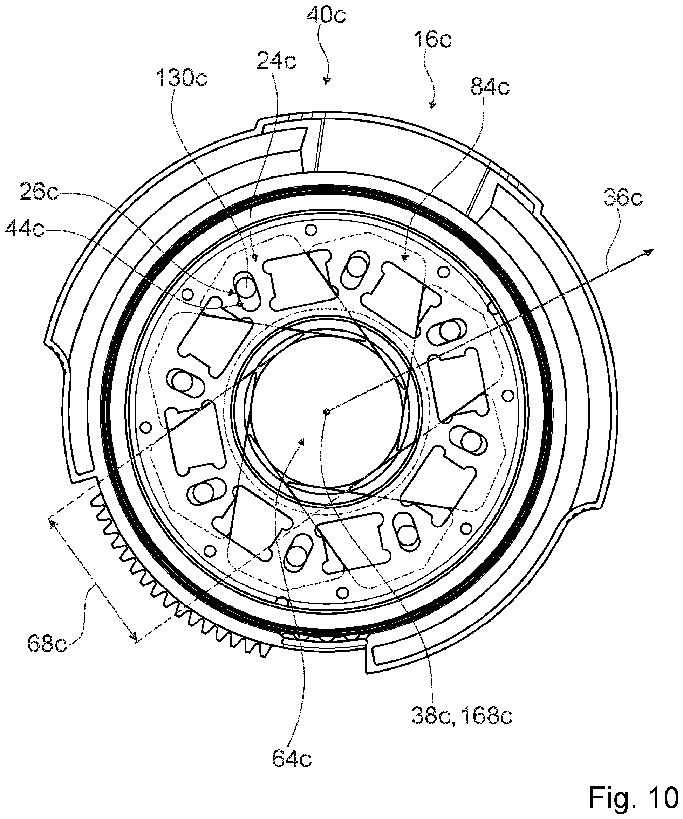

In der Darstellung der Fig. 10 befinden sich die Magnetflussleitelemente 22c, 48c, 50c, 176c in einer zweiten Endposition 84c, in der die innere Öffnung 64c der Magnetflussleiteinheit 24c einen maximalen Öffnungsdurchmesser 68c aufweist. Aus der Lage der Magnetflussleitelemente 22c, 48c, 50c, 176c in der zweiten Endposition 84c wird deutlich, dass die Magnetflussleitelemente 22c, 48c, 50c, 176c bei einer Bewegung zwischen der ersten Endposition 82c und der zweiten Endposition 84c zumindest teilweise geschwenkt werden.

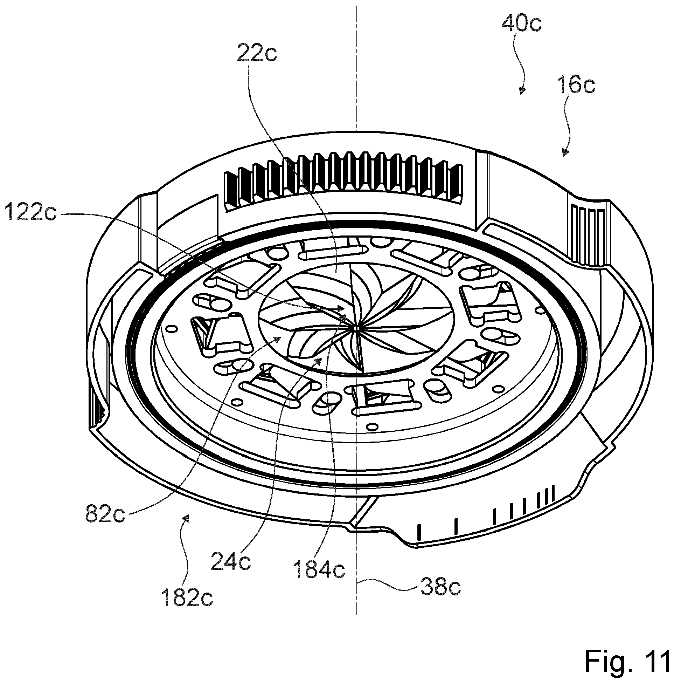

Aus der perspektivischen Darstellung der Magnetflussleiteinheit 24c von Fig. 11 ist ersichtlich, dass die Magnetflussleitelemente 22c, 48c, 50c, 176c auf einer Unterseite 182c eine Auswölbung 184c aufweisen. Die Auswölbung 184c ist jeweils an einem dem Zentrum 168c und/oder der Axialrichtung 38c zugewandten Endbereich der Magnetflussleitelemente 22c, 48c, 50c, 176c, insbesondere an einer Spitze 122c der Magnetflussleitelemente 22c, 48c, 50c, 176c angeordnet. Die Auswölbung 184c ist jeweils auf einer, einer Fase 124c des jeweiligen Magnetflussleitelements 22c, 48c, 50c, 176c in der Axialrichtung 38c gegenüberliegenden Seite der jeweiligen Magnetflussleitelemente 22c, 48c, 50c, 176c angeordnet. In der ersten Endposition 82c bilden die Auswölbungen 184c in einer Zusammenschau eine sägeblattartige Form aus. Durch die Auswölbungen 184c kann vorteilhaft eine Auflagesituation der Magnetflussleitelemente 22c, 48c, 50c, 176c an einer Werkzeugaufnahme 12c optimiert werden. Durch die Auswölbungen 184c kann vorteilhaft eine Leitung des Induktionsmagnetfelds von der Magnetflussleiteinheit 24c zu der Werkzeugaufnahme 12c oder umgekehrt optimiert werden. Alternative Formen und Ausgestaltungen der Auswölbung 184c sowie ein Verzicht auf die Auswölbung 184c und/oder auf die Fase 124c sind selbstverständlich denkbar.

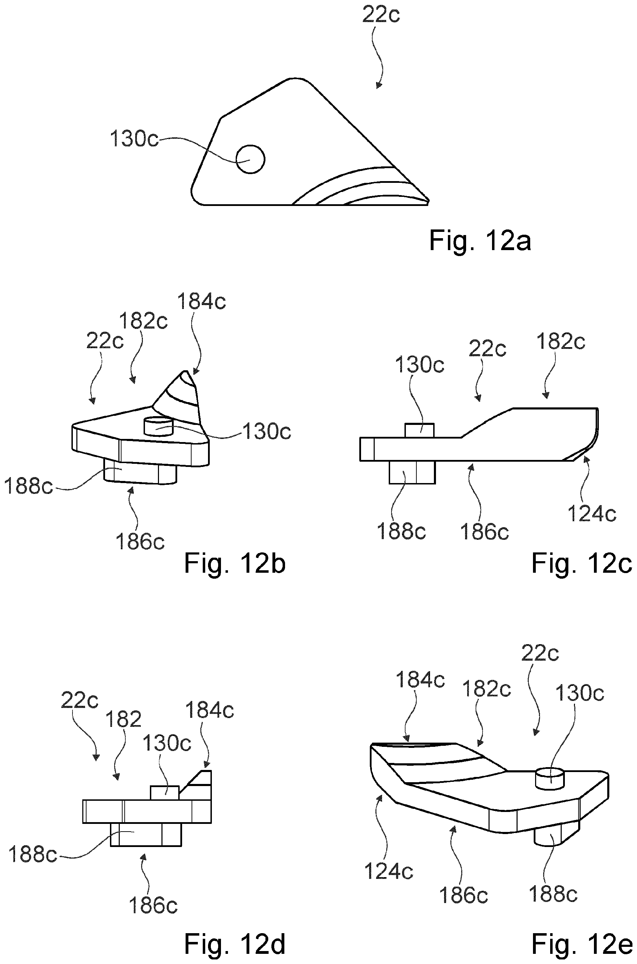

Die Figuren 12a, 12b, 12c, 12d und 12e zeigen schematisch unterschiedliche Ansichten eines Magnetflussleitelements 22c der Magnetflussleiteinheit 24c. Die Auswölbung 184c auf der Unterseite 182c des Magnetflussleitelements 22c ist insbesondere in den Figuren 12b und 12e deutlich erkennbar. Die Fase 124c auf einer Oberseite 186c des Magnetflussleitelements 22c ist insbesondere in den Figuren 12c und 12e deutlich erkennbar. Das Magnetflussleitelement 22c weist auf der Oberseite 186c zudem ein Antriebselement 188c auf, welches dazu vorgesehen ist, eine bei einer Verstellung der Magnetflussleiteinheit 24c (z.B. durch eine Art Antriebsscheibe 164c) erzeugte Kraft und/oder Bewegung auf das jeweilige Magnetflussleitelement 22c zu übertragen. Vorzugsweise bildet das Antriebselement 188c einen Anschlag 166c aus über den das Magnetflussleitelement 22c bei der Verstellung der Magnetflussleiteinheit 24c verschoben werden kann.

### Bezugszeichen

- 10: Werkzeug
- 12: Werkzeugaufnahme
- 14: Induktionsspule
- 16: Induktionsheizeinheit
- 18: Aufnahmebereich
- 20: Rotationsachse
- 22: Magnetflussleitelement
- 24: Magnetflussleiteinheit
- 26: Lagereinheit
- 28: Bewegungsbahn
- 30: Bewegungsbahn
- 32: Bewegungsbahn
- 34: Bewegungskomponente
- 36: Radialrichtung
- 38: Axialrichtung
- 40: Induktionsheizvorrichtung
- 42: Bewegungsebene
- 44: Kulissenführung
- 46: Kulissenführung
- 48: Magnetflussleitelement
- 50: Magnetflussleitelement
- 52: Verlängerung
- 54: Verlängerung
- 56: Auslauf
- 58: Gleitfläche
- 60: Bewegungsbahn
- 62: Bewegungsbahn
- 64: Öffnung
- 66: Außendurchmesser
- 68: Öffnungsdurchmesser
- 70: Kantenlänge
- 72: Längste Seitenkante
- 74: Sägeblattartige Form
- 76: Isogon
- 78: Ecke
- 80: Abschirmeinheit
- 82: Endposition
- 84: Endposition
- 86: Rastposition
- 88: Ein- und/oder Ausschrumpfspannstation
- 90: Verfahrensschritt
- 92: Verfahrensschritt
- 94: Verfahrensschritt
- 96: Verstelleinheit
- 98: Basisgestell
- 100: Haltevorrichtung
- 102: Längeneinstellpin
- 104: Turm
- 106: Lagerschiene
- 112: Werkzeugschaft
- 114: Steuer- und/oder Regeleinheit
- 116: Öffnung
- 118: Spulenachse
- 120: Abschirmfläche
- 122: Spitze
- 124: Fase
- 126: Kulissenführung
- 128: Kulissenführung
- 130: Pin
- 132: Pin
- 134: Pin
- 136: Kulissenführung
- 138: Kulissenführung
- 140: Pin
- 142: Pin
- 144: Pin
- 146: Rastposition
- 148: Kreis
- 150: Verfahrensschritt
- 152: Verfahrensschritt
- 154: Verfahrensschritt
- 156: Antriebseinheit
- 158: Manuelles Antriebselement
- 160: Motorisches Antriebselement
- 162: Werkzeuggreifereinheit
- 164: Antriebsscheibe
- 166: Anschlag
- 168: Zentrum
- 170: Verlängerung
- 172: Bewegungsbahn
- 174: Bewegungsbahn
- 176: Magnetflussleitelement
- 178: Krümmung
- 180: Gesamtbewegung
- 182: Unterseite
- 184: Auswölbung
- 186: Oberseite
- 188: Antriebselement

## Patentansprüche

1. Induktionsheizvorrichtung (40a-c) für ein Ein- und/oder ein Ausschrumpfen von Werkzeugen (10a-c) in und/oder aus einer Werkzeugaufnahme (12a-c) mit einer zumindest eine Induktionsspule (14a-c) umfassenden Induktionsheizeinheit (16a-c), welche dazu vorgesehen ist, zumindest einen Teil einer in einem Aufnahmebereich (18a-c) der Induktionsheizeinheit (16a-c) angeordneten Werkzeugaufnahme (12a-c) bei einem Ein- und/oder Ausschrumpfvorgang durch ein Erhitzen aufzuweiten, wobei der Aufnahmebereich (18a-c) der Induktionsheizeinheit (16a-c) insbesondere zumindest im Wesentlichen parallel zu vorgesehenen Rotationsachsen (20a-c) von in die Induktionsheizeinheit (16a-c) einsetzbaren Werkzeugaufnahmen (12a-c) ausgerichtet ist, mit zumindest einer, zumindest ein Magnetflussleitelement (22a-c) aufweisenden Magnetflussleiteinheit (24a-c) zur Leitung eines durch die Induktionsspule (14a-c) erzeugten Magnetflusses, und mit einer Lagereinheit (26a-c), welche zumindest zu einer beweglichen Lagerung zumindest des Magnetflussleitelements (22a-c) vorgesehen ist, wobei zumindest ein Großteil aller Punkte des Magnetflussleitelements (22a-c), vorzugsweise alle Punkte des Magnetflussleitelements (22a-c), jeweils eine durch die Lagereinheit (26a-c), insbesondere durch zumindest eine Kulissenführung (44a, 46a; 44b, 46b; 44c) der Lagereinheit (26a-c), vorgegebene Bewegungsbahn (28a-c, 30a-c, 32a-c) aufweisen, **dadurch gekennzeichnet, dass** jede der Bewegungsbahnen (28a-c, 30a-c, 32a-c) eine wesentliche Bewegungskomponente (34a-c) aufweist, die senkrecht zu einer Radialrichtung (36a-c) des Aufnahmebereichs (18a-c) und zugleich senkrecht zu einer Axialrichtung (38a-c) des Aufnahmebereichs (18a-c) ausgerichtet ist und wobei zumindest eine der Bewegungsbahnen (28a-c, 30a-c, 32a-c) eine rein lineare Bewegungsbahn (28a-c) ist.

2. Induktionsheizvorrichtung (40a; 40b) nach Anspruch 1, **dadurch gekennzeichnet, dass** die zumindest eine rein lineare Bewegungsbahn (28a-c) zumindest im Wesentlichen senkrecht zu der Radialrichtung (36a; 36b) des Aufnahmebereichs (18a; 18b) der Induktionsheizeinheit (16a; 16b) verläuft.

3. Induktionsheizvorrichtung (40a-c) nach einem der vorhergehenden Ansprüche, **dadurch gekennzeichnet, dass** jede der Bewegungsbahnen (28a-c, 30a-c, 32a-c) in einer zu der Axialrichtung (38a-c) des Aufnahmebereichs (18a-c) zumindest im Wesentlichen senkrecht liegenden Bewegungsebene (42a-c) verläuft.

4. Induktionsheizvorrichtung (40a; 40b) nach einem der vorhergehenden Ansprüche, **dadurch gekennzeichnet, dass** das Magnetflussleitelement (22a; 22b) unverschwenkbar gelagert ist.

5. Induktionsheizvorrichtung (40c) nach Anspruch 1, **dadurch gekennzeichnet, dass** abgesehen von der zumindest einen rein linearen Bewegungsbahn (28c) zumindest ein Großteil aller weiteren Bewegungsbahnen (30c, 32c) gekrümmt sind.

6. Induktionsheizvorrichtung (40c) nach Anspruch 5, **dadurch gekennzeichnet, dass** eine Krümmung (178c) der gekrümmten Bewegungsbahnen (30c, 32c) bei einer Bewegung des zugehörigen Magnetflussleitelements (22c) in Richtung eines Zentrums (168c) der Induktionsheizeinheit (16c) zunimmt.

7. Induktionsheizvorrichtung (40a-c) nach einem der vorhergehenden Ansprüche, **dadurch gekennzeichnet, dass** die Lagereinheit (26a-c) die zumindest im Wesentlichen gerade Kulissenführung (44a-c) zu einer Einschränkung einer Bewegungsfreiheit zumindest des Magnetflussleitelements (22a-c) aufweist.

8. Induktionsheizvorrichtung (40a-c) nach einem der vorhergehenden Ansprüche, **dadurch gekennzeichnet, dass** die Magnetflussleiteinheit (24a-c) zumindest ein weiteres Magnetflussleitelement (48a-c, 50a-c) aufweist, welches benachbart zu dem Magnetflussleitelement (22a-c) angeordnet ist.

9. Induktionsheizvorrichtung (40a-c) nach einem der vorhergehenden Ansprüche, insbesondere nach Anspruch 9, **dadurch gekennzeichnet, dass** das Magnetflussleitelement (22a-c) überlappungsfrei mit jeglichen weiteren Magnetflussleitelementen (48a-c, 50a-c) der Magnetflussleiteinheit (24a-c) ist.

10. Induktionsheizvorrichtung (40a-c) nach Anspruch 8 oder 9, **dadurch gekennzeichnet, dass** benachbarte Magnetflussleitelemente (22a-c, 48a-c, 50a-c) der Magnetflussleiteinheit (24a-c) in allen durch die Lagereinheit (26a-c) einstellbaren Positionen eng aneinander anliegen.

11. Induktionsheizvorrichtung (40c) nach Anspruch 1, **dadurch gekennzeichnet, dass** eine gerade Verlängerung (52c) einer rein linearen Bewegungsbahn (28c) der durch die Lagereinheit (26c) vorgegebenen Schar von Bewegungsbahnen (28c, 30c, 32c) des Magnetflussleitelements (22c) parallel zu einer geraden Verlängerung (170c) einer zusätzlichen weiteren rein linearen Bewegungsbahn (172c) einer durch die Lagereinheit (26c) vorgegebenen weiteren Schar von weiteren Bewegungsbahnen (172c, 174c) eines zusätzlichen weiteren Magnetflussleitelements (176c) der Magnetflussleiteinheit (24c) verläuft, wobei diese beiden geraden Verlängerungen (52c, 170c) auf gegenüberliegenden Seiten der Axialrichtung (38c) und/oder eines Zentrums (168c) der Magnetflussleiteinheit (24c) angeordnet sind.

12. Induktionsheizvorrichtung (40a-c) nach einem der Ansprüche 8 bis 11, **dadurch gekennzeichnet, dass** die Magnetflussleitelemente (22a-c, 48a-c, 50a-c, 176a-c) der Magnetflussleiteinheit (24a-c) dazu vorgesehen sind, ein in der Induktionsheizeinheit (16a-c) angeordnetes Werkzeug (10a-c) oder eine in der Induktionsheizeinheit (16a-c) angeordnete Werkzeugaufnahme (12a-c) derart im Umfang zu umschließen, dass die Umschließung, insbesondere unabhängig von einer Größe des Umfangs des Werkzeugs (10a-c) oder der Werkzeugaufnahme (12a-c), zumindest im Wesentlichen lückenfrei ist.

13. Induktionsheizvorrichtung (40a-c) nach Anspruch 8, **dadurch gekennzeichnet, dass** eine Differenz aus einem maximalen Außendurchmesser (66a-c), innerhalb dessen alle Magnetflussleitelemente (22a-c, 48a-c, 50a-c, 176a-c) der Magnetflussleiteinheit (24a-c) in allen durch die Lagereinheit (26a-c) einstellbaren Positionen angeordnet sind, und einem maximalen Öffnungsdurchmesser (68a-c) der inneren Öffnung (64a-c) höchstens 160 % des maximalen Öffnungsdurchmessers (68a-c) und/oder einer maximalen Kantenlänge (70a-c) einer längsten Seitenkante (72a-c) eines der Magnetflussleitelemente (22a-c, 48a-c, 50a-c, 176a-c) beträgt.

14. Induktionsheizvorrichtung (40a-c) nach Anspruch 8 oder 13, **dadurch gekennzeichnet, dass** die Magnetflussleitelemente (22a-c, 48a-c, 50a-c, 176a-c) der Magnetflussleiteinheit (24a-c) in einer Zusammenschau eine sägeblattartige Form (74a-c) oder eine Form eines Isogons (76a-c), insbesondere mit einer Gesamtzahl an Magnetflussleitelementen (22a-c, 48a-c, 50a-c, 176a-c) der Magnetflussleiteinheit (24a-c) entsprechenden Anzahl an Ecken (78a-c), ausbildet.

15. Induktionsheizvorrichtung (40a-c) nach einem der vorhergehenden Ansprüche, **dadurch gekennzeichnet, dass** das Magnetflussleitelement (22a-c) eine Form eines, insbesondere spitzwinkligen, gleichschenkligen Dreiecks aufweist oder eine Form eines, insbesondere spitzwinkligen, gleichschenkligen Dreiecks, bei dem eine der Spitze des gleichschenkligen Dreiecks gegenüberliegende Ecke gerade oder rund abgeschnitten ist, aufweist.

16. Induktionsheizvorrichtung (40a-c) nach einem der vorhergehenden Ansprüche, **dadurch gekennzeichnet, dass** die Lagereinheit (26a-c) zwischen Endpositionen (82a-c, 84a-c) der Bewegungsbahnen (28a-c, 30a-c, 32a-c) zumindest eine Rastposition (86a-c) für die Magnetflussleiteinheit (24a-c) ausbildet.

17. Ein- und/oder Ausschrumpfspannstation (88a-c) für Werkzeuge (1 0a-c), insbesondere Einstell- und/oder Messgerät für Werkzeuge (10a-c) mit einer Ein- und/oder Ausschrumpfspannstation (88a-c) für Werkzeuge (10a-c), mit einer Induktionsheizvorrichtung (40a-c) nach einem der vorhergehenden Ansprüche.

18. Ein- und/oder Ausschrumpfspannstation (88a-c) nach Anspruch 17, **gekennzeichnet durch** eine motorisch angetriebene Verstelleinheit (96a-c), welche dazu vorgesehen ist, zumindest das Magnetflussleitelement (22a-c) zumindest teilautomatisiert zur Einstellung eines Öffnungsdurchmessers (68a-c) einer inneren Öffnung (64a-c) der Magnetflussleiteinheit (24a-c) entlang der durch die Lagereinheit (26a-c) vorgegebenen Bewegungsbahnen (28a-c, 30a-c, 32a-c) zu bewegen.

19. Verfahren zum Betrieb einer Induktionsheizvorrichtung (40a-c), insbesondere nach einem der Ansprüche 1 bis 16, bei welchem in zumindest einem Verfahrensschritt (90a-c) zumindest ein Teil einer in einem Aufnahmebereich (18a-c) der Induktionsheizeinheit (16a-c) angeordneten Werkzeugaufnahme (12a-c) in einem Ein- und/oder Ausschrumpfvorgang durch ein induktives Erhitzen aufgeweitet wird, wobei in zumindest einem weiteren Verfahrensschritt (92a-c) eine Ausbreitung eines Induktionsmagnetfelds der Induktionsheizeinheit (16a-c) in einer Axialrichtung (38a-c) des Aufnahmebereichs (18a-c) oberhalb und/oder unterhalb der Induktionsheizeinheit (16a-c) durch Magnetflussleitelemente (22a-c, 48a-c, 50a-c, 176a-c) einer Magnetflussleiteinheit (24a-c) abgeschirmt wird, **dadurch gekennzeichnet, dass** zur Verstellung der Magnetflussleitelemente (22a-c, 48a-c, 50a-c, 176a-c) relativ zu der Werkzeugaufnahme (12a-c) alle Punkte des Magnetflussleitelements (22a-c, 48a-c, 50a-c, 176a-c) entlang Bewegungsbahnen (28a-c, 30a-c, 32a-c) bewegt werden, welche jeweils eine wesentliche Bewegungskomponente (34a-c) aufweisen, die senkrecht zu einer Radialrichtung (36a-c) des Aufnahmebereichs (18a-c) und zugleich senkrecht zu einer Axialrichtung (38a-c) des Aufnahmebereichs (18a-c) ausgerichtet ist.

20. Verfahren zur Herstellung der Induktionsheizvorrichtung (40a-c) nach einem der Ansprüche 1 bis 16, **dadurch gekennzeichnet, dass** zumindest das Magnetflussleitelement (22a-c) in zumindest einem Verfahrensschritt (94a-c) zumindest teilweise durch ein additives Fertigungsverfahren, insbesondere durch ein 3D-Druckverfahren, hergestellt wird.

## Claims

1. Induction heating device (40a-c) for a shrink-clamping and/or unshrink-unclamping of tools (1 0a-c) into and/or out of a tool holder (12a-c),
with an induction heating unit (16a-c) which comprises at least one induction coil (14a-c) and is configured, in a shrink-clamping and/or unshrink-unclamping process, to heat-expand at least a portion of a tool holder (12a-c) that is arranged in a receiving region (18a-c) of the induction heating unit (16a-c), wherein the receiving region (18a-c) of the induction heating unit (16a-c) is in particular oriented at least substantially parallel to designated rotation axes (20a-c) of tool holders (12a-c) which are insertable in the induction heating unit (16a-c),
with at least one magnetic flux conducting unit (24a-c) comprising at least one magnetic flux conducting element (22a-c) for a conduction of a magnetic flux generated by the induction coil (14a-c), and
with a bearing unit (26a-c) which is configured at least for a movable support at least of the magnetic flux conducting element (22a-c), wherein at least a large portion of all points of the magnetic flux conducting element (22a-c), preferably all points of the magnetic flux conducting element (22a-c), each have a respective movement path (28a-c, 30a-c, 32a-c) that is predetermined by the bearing unit (26a-c), in particular by at least one slotted guide (44a, 46a; 44b, 46b; 44c) of the bearing unit (26a-c),
**characterised in that** each of the movement paths (28a-c, 30a-c, 32a-c) has an essential movement component (34a-c) that is oriented perpendicularly to a radial direction (36a-c) of the receiving region (18a-c) and at the same time perpendicularly to an axial direction (38a-c) of the receiving region (18a-c),
and wherein at least one of the movement paths (28a-c, 30a-c, 32a-c) is a purely linear movement path (28a-c).

2. Induction heating device (40a; 40b) according to claim 1,
**characterised in that** the at least one purely linear movement path (28a-c) runs at least substantially perpendicularly to the radial direction (36a; 36b) of the receiving region (18a; 18b) of the induction heating unit (16a; 16b).

3. induction heating device (40a-c) according to one of the preceding claims,
**characterised in that** each of the movement paths (28a-c, 30a-c, 32a-c) extends in a movement plane (42a-c) that is situated at least substantially perpendicularly to the axial direction (38a-c) of the receiving region (18a-c).

4. induction heating device (40a; 40b) according to one of the preceding claims, **characterised in that** the magnetic flux conducting element (22a; 22b) is supported in a non-pivotable manner.

5. induction heating device (40c) according to claim 1,
**characterised in that,** except for the at least one purely linear movement path (28c), at least a large portion of all further movement paths (30c, 32c) are curved.

6. induction heating device (40c) according to claim 5,
**characterised in that** a curvature (178c) of the curved movement paths (30c, 32c) increases during a movement of the allocated magnetic flux conducting element (22c) towards a centre (168c) of the induction heating unit (16c).

7. induction heating device (40a-c) according to one of the preceding claims, **characterised in that** the bearing unit (26a-c) comprises the at least substantially straight slotted guide (44a-c) for a limitation of a freedom of movement at least of the magnetic flux conducting element (22a-c).

8. induction heating device (40a-c) according to one of the preceding claims, **characterised in that** the magnetic flux conducting unit (24a-c) comprises at least one further magnetic flux conducting element (48a-c, 50a-c), which is arranged neighbouring the magnetic flux conducting element (22a-c).

9. Induction heating device (40a-c) according to one of the preceding claims, in particular according to claim 9,
**characterised in that** the magnetic flux conducting element (22a-c) is free of overlap with any further magnetic flux conducting elements (48a-c, 50a-c) of the magnetic flux conducting unit (24a-c).

10. induction heating device (40a-c) according to claim 8 or 9,
**characterised in that** neighbouring magnetic flux conducting elements (22a-c, 48a-c, 50a-c) of the magnetic flux conducting unit (24a-c) are closely adjacent to one another in all positions that can be set by the bearing unit (26a-c).

11. induction heating device (40c) according to claim 1,
**characterised in that** a straight prolongation (52c) of a purely linear movement path (28c), of the family of movement paths (28c, 30c, 32c) of the magnetic flux conducting element (22c) which are predetermined by the bearing unit (26c), runs parallel to a straight prolongation (170c) of an additional further purely linear movement path (172c) of a further family of further movement paths (172c, 174c) which are predetermined by the bearing unit (26c), of an additional further magnetic flux conducting element (176c) of the magnetic flux conducting unit (24c), wherein these two straight prolongations (52c, 170c) are arranged on opposite-situated sides of the axial direction (38c) and/or of a centre (168c) of the magnetic flux conducting unit (24c).

12. induction heating device (40a-c) according to one of claims 8 to 11,
**characterised in that** the magnetic flux conducting elements (22a-c, 48a-c, 50a-c, 176a-c) of the magnetic flux conducting unit (24a-c) are configured to circumferentially encompass a tool (10a-c) arranged in the induction heating unit (16a-c) or a tool holder (12a-c) arranged in the induction heating unit (16a-c) in such a way that, in particular independently from a dimension of the circumference of the tool (10a-c) or the tool holder (12a-c), the encompassing is at least substantially gap-free.

13. Induction heating device (40a-c) according to claim 8,
**characterised in that** a difference between a maximum outer diameter (66a-c), within which all magnetic flux conducting elements (22a-c, 48a-c, 50a-c, 176a-c) of the magnetic flux-conducting unit (24a-c) are arranged in all positions which can be set by the bearing unit (26a-c), and a maximum opening diameter (68a-c) of the inner opening (64a-c) amounts to maximally 160 % of the maximum opening diameter (68a-c) and/or of a maximum edge length (70a-c) of a longest side edge (72a-c) of one of the magnetic flux conducting elements (22a-c, 48a-c, 50a-c, 176a-c).

14. induction heating device (40a-c) according to claim 8 or 13,
**characterised in that** the magnetic flux conducting elements (22a-c, 48a-c, 50a-c, 176a-c) of the magnetic flux conducting unit (24a-c) form in a synopsis a saw-blade-like shape (74a-c) or an isogon shape (76a-c), in particular with a number of corners (78a-c) that corresponds to a total number of magnetic flux conducting elements (22a-c, 48a-c, 50a-c, 176a-c) of the magnetic flux conducting unit (24a-c).

15. induction heating device (40a-c) according to one of the preceding claims,
**characterised in that** the magnetic flux conducting element (22a-c) has a shape of an, in particular acute-angled, isosceles triangle or a shape of an, in particular acute-angled, isosceles triangle in which a corner opposite the vertex of the isosceles triangle has been cut off in a straight or rounded manner.

16. induction heating device (40a-c) according to one of the preceding claims, **characterised in that** the bearing unit (26a-c) realizes, between end positions (82a-c, 84a-c) of the movement paths (28a-c, 30a-c, 32a-c), at least one latch position (86a-c) for the magnetic flux conducting unit (24a-c).

17. Shrink-clamping and/or unshrink-unclamping station (88a-c) for tools (10a-c), in particular a presetting and/or measuring apparatus for tools (10a-c) with a shrink-clamping and/or unshrink-unclamping station (88a-c) for tools (10a-c),
with an induction heating device (40a-c) according to one of the preceding claims.

18. Shrink-clamping and/or unshrink-unclamping station (88a-c) according to claim 17,
**characterised by** a motorically driven adjusting unit (96a-c), which is configured, for the purpose of setting an opening diameter (68a-c) of an inner opening (64a-c) of the magnetic flux conducting unit (24a-c), to move at least the magnetic flux conducting element (22a-c), in an at least semi-automated manner, along the movement paths (28a-c, 30a-c, 32a-c) predetermined by the bearing unit (26a-c).

19. Method for operating an induction heating device (40a-c), in particular according to one of claims 1 to 16,
in which in at least one method step (90a-c) at least a portion of a tool holder (12a-c) that is arranged in a receiving region (18a-c) of the induction heating unit (16a-c) is expanded by inductive heating in a shrink-clamping and/or unshrink-unclamping process,
wherein in at least one further method step (92a-c) a spreading of an induction magnetic field of the induction heating unit (16a-c) in an axial direction (38a-c) of the receiving region (18a-c) above and/or below the induction heating unit (16a-c) is shielded by magnetic flux conducting elements (22a-c, 48a-c, 50a-c, 176a-c) of a magnetic flux conducting unit (24a-c),
**characterised in that** for an adjustment of the magnetic flux conducting elements (22a-c, 48a-c, 50a-c, 176a-c) relative to the tool holder (12a-c), all points of the magnetic flux conducting element (22a-c, 48a-c, 50a-c, 176a-c) are moved along movement paths (28a-c, 30a-c, 32a-c), each of which has an essential movement component (34a-c) that is oriented perpendicularly to a radial direction (36a-c) of the receiving region (18a-c) and at the same time perpendicularly to an axial direction (38a-c) of the receiving region (18a-c).

20. Method for producing the induction heating device (40a-c) according to one of claims 1 to 16,
**characterised in that** at least the magnetic flux conducting element (22a-c) is manufactured in at least one method step (94a-c) at least partly by an additive manufacturing procedure, in particular by a 3D-printing procedure.

## Revendications

1. Dispositif de chauffage par induction (40a-c) pour la rétraction d'outils (10a-c) dedans et/ou dehors un logement d'outil (12a-c),
avec au moins une unité de chauffage par induction (16a-c) qui comprend au moins une bobine à induction (14a-c) et est conçue pour épandre moyennant chauffage, dans un procès de rétraction dedans et/ou dehors, au moins une partie d'un logement d'outil (12a-c) disposé dans une zone recevante (18a-c) de l'unité de chauffage par induction (40a-c),
où la zone recevante (18a-c) de l'unité de chauffage par induction (16a-c) est en particulier alignée au moins sensiblement en parallèle aux axes rotatifs dédiés (20a-c) de logements d'outil (12a-c) qui peuvent être insérés dans l'unité de chauffage par induction (16a-c),
avec au moins une unité de guidage de flux magnétique (24a-c), comprenant au moins un élément de guidage de flux magnétique (22a-c), pour conduire un flux magnétique généré par la bobine à induction (14a-c), et
avec une unité palier (26a-c) conçue au moins pour un support mobile au moins de l'élément de guidage de flux magnétique (22a-c),
où au moins une grande partie de tous les points de l'élément de guidage de flux magnétique (22a-c), de préférence tous les points de l'élément de guidage de flux magnétique (22a-c), respectivement comprennent un chemin de mouvement (28a-c, 30a-c, 32a-c) défini par l'unité palier (26a-c), en particulier par au moins un guide-coulisse (44a, 46a ; 44b, 46b ; 44c) de l'unité palier (26a-c),
**caractérisé en ce que** chacun des chemins de mouvement (28a-c, 30a-c, 32a-c) comporte un composant de mouvement essentiel (34a-c) aligné perpendiculairement à une direction radiale (36a-c) de la zone recevante (18a-c) et au même temps perpendiculairement à une direction axiale (38a-c) de la zone recevante (18a-c),
et où au moins un des chemins de mouvement (28a-c, 30a-c, 32a-c) est un chemin de mouvement purement linéaire (28a-c).

2. Dispositif de chauffage par induction (40a ; 40b) selon la revendication 1,
**caractérisé en ce que** l'au moins un chemin de mouvement purement linéaire (28a-c) s'étend au moins sensiblement perpendiculairement à la direction radiale (36a ; 36b) de la zone recevante (18a ; 18b) de l'unité de chauffage par induction (16a ; 16b).

3. Dispositif de chauffage par induction (40a-c) selon l'une des revendications précédentes,
**caractérisé en ce que** chacun des chemins de mouvement (28a-c, 30a-c, 32a-c) s'étend dans un plan de mouvement (42a-c) situé au moins sensiblement perpendiculairement à la direction axiale (38a-c) de la zone recevante (18a-c).

4. Dispositif de chauffage par induction (40a ; 40b) selon l'une des revendications précédentes,
**caractérisé en ce que** l'élément de guidage de flux magnétique (22a ; 22b) est supporté de telle manière qu'il n'est pas pivotable.

5. Dispositif de chauffage par induction (40c) selon la revendication 1,
**caractérisé en ce que** - à l'exception de l'au moins un chemin de mouvement purement linéaire (28c) - au moins une grande partie de tous les autres chemins de mouvement (30c, 32c) sont courbés.

6. Dispositif de chauffage par induction (40c) selon la revendication 5,
**caractérisé en ce qu'**une courbure (178c) des chemins de mouvement courbés (30c, 32c) accroît dans un mouvement de l'élément de guidage de flux magnétique associé (22c) vers un centre (168c) de l'unité de chauffage par induction (16c).

7. Dispositif de chauffage par induction (40a-c) selon l'une des revendications précédentes,
**caractérisé en ce que** l'unité palier (26a-c) comprend le guide-coulisse (44a-c) qui est au moins sensiblement droit pour la limitation d'une liberté de mouvement au moins de l'élément de guidage de flux magnétique (22a-c).

8. Dispositif de chauffage par induction (40a-c) selon l'une des revendications précédentes,
**caractérisé en ce que** l'unité de guidage de flux magnétique (24a-c) comprend au moins un autre élément de guidage de flux magnétique (48a-c, 50a-c) disposé voisinant l'élément de guidage de flux magnétique (22a-c).

9. Dispositif de chauffage par induction (40a-c) selon l'une des revendications précédentes, en particulier selon la revendication 9,
**caractérisé en ce que** l'élément de guidage de flux magnétique (22a-c) est libre de chevauchement avec quelconques autres éléments de guidage de flux magnétique (48a-c, 50a-c) de l'unité de guidage de flux magnétique (24a-c).

10. Dispositif de chauffage par induction (40a-c) selon la revendication 8 ou 9,
**caractérisé en ce que** des éléments de guidage de flux magnétique voisins (22a-c, 48a-c, 50a-c) de l'unité de guidage de flux magnétique (24a-c) sont étroitement adjacents les uns aux autres dans toutes les positions qui peuvent être réglées moyennant l'unité palier (26a-c).

11. Dispositif de chauffage par induction (40c) selon la revendication 1,
**caractérisé en ce qu'**un rallongement droit (52c) d'un chemin de mouvement purement linéaire (28c) de la famille de chemins de mouvement (28c, 30c, 32c) de l'élément de guidage de flux magnétique (22c), qui sont définis par l'unité palier (26c), s'étend en parallèle à un rallongement droit (170c) d'un chemin de mouvement purement linéaire additionnel (172c) d'une autre famille de chemins de mouvement additionnels (172c, 174c) d'un autre élément de guidage de flux magnétique (22c) de l'unité de guidage de flux magnétique (24c), qui est définie par l'unité palier (26c),
lesdits deux rallongements droits (52c, 170c) étant disposés sur côtés opposés de la direction axiale (38c) et/ou d'un centre (168c) de l'unité de guidage de flux magnétique (24c).

12. Dispositif de chauffage par induction (40a-c) selon l'une des revendications 8 à 11,
**caractérisé en ce que** les éléments de guidage de flux magnétique (22a-c, 48a-c, 50a-c, 176a-c) de l'unité de guidage de flux magnétique (24a-c) sont conçus pour entourer en circonférence un outil (10a-c) disposé dans l'unité de chauffage par induction (16a-c) ou un logement d'outil (12a-c) disposé dans l'unité de chauffage par induction (16a-c) de telle manière que l'entourage est au moins sensiblement libre des écarts, en particulier indépendamment d'une dimension de la circonférence de l'outil (10a-c) ou du logement d'outil (12a-c).

13. Dispositif de chauffage par induction (40a-c) selon la revendication 8,
**caractérisé en ce qu'**une différence d'un diamètre extérieur maximal (66a-c), à l'intérieur duquel tous les éléments de guidage de flux magnétique (22a-c, 48a-c, 50a-c, 176a-c) de l'unité de guidage de flux magnétique (24a-c) sont disposés en toutes les positions qui peuvent être réglées moyennant l'unité palier (26a-c), et un diamètre d'aperture maximal (68a-c) de l'aperture intérieure (64a-c) se monte à maximalement 160 % du diamètre d'aperture maximal (68a-c) et/ou d'une longueur d'arête maximale (70a-c) du bord latéral le plus long (72a-c) de l'un des éléments de guidage de flux magnétique (22a-c, 48a-c, 50a-c, 176a-c).

14. Dispositif de chauffage par induction (40a-c) selon l'une des revendications 8 à 11,
**caractérisé en ce que** dans une synopsis les éléments de guidage de flux magnétique (22a-c, 48a-c, 50a-c, 176a-c) de l'unité de guidage de flux magnétique (24a-c) forment la forme d'une lame de scie (74a-c) ou la forme d'un isogone (76a-c), en particulier ayant un nombre de coins (78a-c) équivalent à un nombre total d'éléments de guidage de flux magnétique (22a-c, 48a-c, 50a-c, 176a-c) de l'unité de guidage de flux magnétique (24a-c).

15. Dispositif de chauffage par induction (40a-c) selon l'une des revendications précédentes,
**caractérisé en ce que** l'élément de guidage de flux magnétique (22a-c) a la forme d'un triangle, en particulier un triangle isocèle à angles aigus, ou la forme d'un triangle, en particulier d'un angle isocèle à angles aigus, où un coin situé vis-à-vis le sommet du triangle isocèle est coupé en coupe droite ou en coupe arrondie.

16. Dispositif de chauffage par induction (40a-c) selon l'une des revendications précédentes,
**caractérisé en ce que** l'unité palier (26a-c) forme entre positions d'extrémité (82a-c, 84a-c) des chemins de mouvement (28a-c, 30a-c, 32a-c) au moins une position d'encliquetage (86a-c) pour l'unité de guidage de flux magnétique (24a-c).

17. Station de serrage à rétraction dedans et/ou dehors (88a-c) pour outils (10a-c), en particulier appareil de réglage et/ou de mesure pour outils (10a-c) avec une station de serrage à rétraction dedans et/ou dehors (88a-c) pour outils (10a-c), avec un dispositif de chauffage par induction (40a-c) selon l'une des revendications précédentes.

18. Station de serrage et/ou enserrage à rétraction dedans et/ou dehors (88a-c) selon la revendication 17,
**caractérisé par** une unité d'ajustage (96a-c) qui est entraînée par moteur et est conçue, pour le réglage d'un diamètre d'aperture (68a-c) d'une aperture intérieure (64a-c) de l'unité de guidage de flux magnétique (24a-c), pour mouvoir au moins l'élément de guidage de flux magnétique (22a-c) de façon au moins semi-automatisée le long des chemins de mouvement (28a-c, 30a-c, 32a-c) définis par l'unité palier (26a-c).

19. Procédé de fonctionnement d'un dispositif de chauffage par induction (40a-c), en particulier selon l'une des revendications 1 à 16,
dans lequel dans au moins une étape de procédé (90a-c) au moins une partie d'un logement d'outil (12a-c) disposé dans une zone recevante (18a-c) de l'unité de chauffage par induction (16a-c) est épandue par chauffage inductive dans un procès de rétraction dedans et/ou dehors,
où dans au moins une autre étape de procédé (92a-c) la propagation d'un champ magnétique inductif de l'unité de chauffage par induction (16a-c) en direction axiale (38a-c) de la zone recevante (18a-c), au-dessus et/ou au-dessous de l'unité de chauffage à induction (16a-c), est blindée par des éléments de guidage de flux magnétique (22a-c, 48a-c, 50a-c, 176a-c) d'une unité de guidage de flux magnétique (24a-c),
**caractérisé en ce que** pour l'ajustage des éléments de guidage de flux magnétique (22a-c, 48a-c, 50a-c, 176a-c) par rapport au logement d'outil (12a-c), tous les points de l'élément de guidage de flux magnétique (22a-c, 48a-c, 50a-c, 176a-c) sont mus le long de chemins de mouvement (28a-c, 30a-c, 32a-c), chacun desquels comporte un composant de mouvement essentiel (34a-c) aligné perpendiculairement à une direction radiale (36a-c) de la zone recevante (18a-c) et au même temps perpendiculairement à une direction axiale (38a-c) de la zone recevante (18a-c).

20. Procédé pour la fabrication du dispositif de chauffage par induction (40a-c) selon l'une des revendications 1 à 16,
**caractérisé en ce qu'au** moins l'élément de guidage de flux magnétique (22a-c) est produit dans au moins une étape de procédé (94a-c) au moins partiellement par une procédure de fabrication additif, en particulier par une procédure d'impression 3D.
